Europäisches Patentamt

European Patent Office

Office européen des brevets

(11) EP 0 735 727 B1

(19)

(12) **FASCICULE DE BREVET EUROPEEN**

(45) Date de publication et mention
de la délivrance du brevet:
**05.06.2002 Bulletin 2002/23**

(51) Int Cl.$^7$: **H04L 12/56**, H04Q 11/04

(21) Numéro de dépôt: **96400619.1**

(22) Date de dépôt: **22.03.1996**

(54) **Commutateur ATM utilisant une commutation synchrone par groupes de lignes**

ATM Vermittler mit Verwendung eines synchronen Gruppenvermittlungsverfahrens

ATM switch using synchronous group switching

(84) Etats contractants désignés:
**DE ES GB IT SE**

(30) Priorité: **27.03.1995 FR 9503560**

(43) Date de publication de la demande:
**02.10.1996 Bulletin 1996/40**

(73) Titulaire: **Ericsson France**
**91300 Massy (FR)**

(72) Inventeur: **Ha-Duong, Tuan**
**92160 Antony (FR)**

(74) Mandataire: **Loisel, Bertrand**
**Cabinet Plasseraud,**
**84, rue d'Amsterdam**
**75440 Paris Cédex 09 (FR)**

(56) Documents cités:
**EP-A- 0 524 350** **US-A- 5 124 978**

• **IEEE Trans. on Communication, Vol 40, No 2,**
**Février 92, pages 423-430, "A Growable Pack**
**(ATM) switch architecture: design principle**
**applications", XP000274977**

**Description**

La présente invention concerne le domaine de la commutation dans les réseaux à mode de transfert asynchrone (ATM).

Si, depuis une quinzaine d'années, de nombreuses propositions ont été faites sur l'architecture des commutateurs ATM, rares sont celles qui répondent à un véritable objectif industriel. Pour cela il est nécessaire de tenir compte des divers besoins du réseau, en particulier de l'extension dynamique de la capacité des commutateurs, qui varient considérablement dans le temps et dans l'espace.

Parmi les travaux pionniers sur les commutateurs ATM, on peut citer trois réalisations remarquables qui sont basées sur trois principes de base totalement différents : le commutateur Prélude (voir "Asynchronous Time Division Techniques : An Experimental Packet Network Integrating Video Communication", par A. Thomas et al, Proc. ISS'84, Florence, Mai 1984, article 32C2); le commutateur Starlite (voir "Starlite : A Wideband Digital Switch", par A. Huang et al, Proc. GLOBECOM'84, Atlanta, Décembre 1984, pages 121-125); et le commutateur Knockout (voir "The Knockout Switch : A Simple, Modular Architecture for High-Performance Packet Switching", par Y.S. Yeh et al, IEEE JSAC, Vol. SAC-5, Octobre 1987, pages 1274-1283). Une revue de ces techniques de base peut être lue dans l'article "Fast Packet Switch Architectures for Broadband Integrated Services Digital Networks" de F.A. Tobagi, Proc. IEEE, Vol.78, N°1, Janvier 1990, pages 133-167. Le commutateur Prélude est basé sur la division de temps avec des files d'attente en sortie, mises en mémoire commune. Le commutateur Starlite utilise conjointement des réseaux de tri et des réseaux d'auto-acheminement de type Banyan. L'idée directrice du commutateur Knockout consiste à concentrer les cellules ATM de N sources vers L lignes sortantes de façon synchrone, ces L lignes sortantes entrant dans une file d'attente logique placée devant l'interface externe. On accepte une perte de cellules due à la contention spatiale dans le concentrateur. Un tel cas se produit quand plus de L cellules se présentent simultanément parmi N entrées du concentrateur. Cette perte est acceptable si le débit moyen des L sorties du concentrateur est faible.

Quand ces techniques de base sont utilisées, divers problèmes technologiques empêchent la construction de commutateurs de grande taille : le partage de temps limite très fortement la taille de la matrice Prélude, et on doit utiliser des structures à multi-étages du type réseau de Clos. Cette architecture de nouveau rencontre des problèmes spécifiques à la commutation ATM, à savoir que dans un commutateur à débit variable, le taux de blocage est difficile à maîtriser sans un surcoût important. Les réseaux de type Starlite de grande taille génèrent un ensemble complexe de connexions internes. En outre, à cause des contentions, l'ordre des cellules dans un flot peut être perdu, ce qui demande une reconstitution à la sortie du commutateur. Le commutateur Knockout a l'inconvénient d'une croissance au carré du nombre d'éléments de filtrage et d'interconnexion.

De nombreuses propositions ont été faites pour résoudre le problème d'architecture des commutateurs ATM de grande taille. Dans l'article "KSMINs : Knockout Switch Based Multistage Interconnection Networks for High-Speed Packet Switching" (Proc. GLOBECOM'90, San Diego, Décembre 1990, Vol.1, pages 218-223), Y.M. Kim et al proposent d'interconnecter des commutateurs Knockout selon un réseau multi-étages de type Banyan, pour parvenir à une complexité en N.logN. Mais cette solution a l'inconvénient de nécessiter plusieurs étages de files d'attente et, en outre, des blocages peuvent se produire dans les mailles du réseau multi-étages.

L'architecture Knockout (K.O.) a été généralisée par l'équipe auteur de celle-ci et décrite dans l'article intitulé "A Growable Packet (ATM) Switch Architecture : Design Principles and Applications" (K.Y. Eng et al, IEEE Trans. on Communications, Vol. 40, N°2, Février 1992, pages 423-430). Cette architecture généralisée est ci-après appelée "K.O.-bis". L'architecture K.O.-bis présente les traits distinctifs suivants :

2A - de même que le K.O., le K.O.-bis est synchrone jusqu'à l'unique file d'attente à la sortie, il respecte naturellement le séquencement des cellules ATM ;

2B - le module terminal de base est (par exemple) une matrice de 42x16, dont la réalisation peut être faite de diverses manières (partage de temps avec ou sans partage de mémoire, ou Knockout pur...);

2C - ces matrices terminales sont connectées à un réseau synchrone d'interconnexion qui présente ainsi un certain taux d'expansion ;

2D - le principe d'élimination statistique des cellules est généralisé pour les groupes fixes de lignes sortant du réseau d'interconnexion synchrone, par exemple groupe de 42 lignes portant le trafic de 16 interfaces externes ;

2E - le réseau d'interconnexion est fait de deux étages, interconnectés ensemble et avec le dernier étage de matrices de façon classique pour former un réseau de Clos sans blocage, à condition qu'il n'y a pas plus que (par exemple) 42 cellules simultanément destinées à la même matrice de sortie ;

2F - un algorithme global à l'entrée du réseau élimine les cellules excédentaires pour réaliser la condition 2E ci-dessus ;

2G - cet algorithme est suivi par un autre algorithme global d'attribution de chemins, à travers le réseau d'interconnexion, à toutes les cellules d'un instant donné. Les auteurs ont démontré que l'algorithme introduit une perte supplémentaire de cellules assez faible.

Cette architecture demande une technologie très rapide pour exécuter ces deux algorithmes qui doivent examiner, pour chaque temps de cellule, toutes les cellules entrant au commutateur. La taille du commutateur est ainsi limitée par la technologie nécessaire. Le réseau d'interconnexion de cette architecture représente une unique gamme de commutateurs d'une taille maximale fixe. En changeant de gamme, il faudrait changer totalement le réseau d'interconnexion. Finalement, à cause du maillage complet entre le réseau et le dernier étage, la mise de départ est grande car seules les matrices terminales peuvent être équipées au fur et à mesure, et non le réseau.

Un autre exemple de système de télécommunication ATM, reposant sur un réseau d'interconnexion asynchrone, est décrit dans EP-A-0 524 350.

Un but de la présente invention est de proposer une nouvelle architecture pour un commutateur ATM qui s'adapte mieux que celles antérieurement connues aux contraintes technologiques imposées par le mode de transfert asynchrone à haut débit.

Selon l'invention, un commutateur ATM comprend des matrices de commutation par lignes ayant chacune m entrées et n sorties, m et n étant deux entiers tels que m≥n, et un réseau synchrone d'interconnexion reliant des lignes entrantes du commutateur ATM aux entrées des matrices de commutation par lignes, les sorties des matrices de commutation par lignes étant reliées à des lignes sortantes respectives du commutateur ATM. Le réseau synchrone d'interconnexion comprend k étages successifs de commutateurs synchrones élémentaires par groupes ayant chacun au moins un et au plus p groupes de m entrées et au moins un et au plus p groupes de m sorties, k et p étant des entiers avec p≥2, des groupes de m lignes reliant chacun un groupe de m sorties d'un commutateur synchrone élémentaire par groupes à un groupe de m entrées d'un commutateur synchrone élémentaire par groupes de l'étage suivant, et des groupes de m lignes reliant chacun un groupe de m sorties d'un commutateur synchrone élémentaire par groupes du dernier étage aux m entrées d'une matrice de commutation par lignes.

Les matrices de commutation par lignes acheminent les cellules sur la base de l'identité d'une ligne de sortie, tandis que les commutateurs synchrones élémentaires par groupes acheminent les cellules sur la base de l'identité d'un groupe de lignes destinataire.

Chaque commutateur synchrone élémentaire par groupes (CSEG) comprend au moins un et au plus p concentrateurs élémentaires à pm entrées et m sorties, les m sorties de chaque concentrateur élémentaire constituant un groupe de m sorties dudit CSEG, et chaque entrée dudit CSEG étant reliée à une entrée respective de chacun des concentrateurs élémentaires dudit CSEG par l'intermédiaire d'un filtre d'élimination de cellules ATM non destinées à une sortie dudit concentrateur élémentaire. Le réseau d'interconnexion est alors basé sur des commutateurs élémentaires à diffusion, filtrage et concentration, de sorte qu'il généralise le principe Knockout.

Typiquement, le réseau synchrone d'interconnexion d'un commutateur ATM à N'c'm lignes entrantes et N'c'm lignes sortantes comprend c' coeurs de commutation synchrone par groupes, c' étant un entier au plus égal à c=m/n. Chaque coeur de commutation synchrone par groupe a au moins N'm lignes d'entrée recevant de façon synchrone les cellules ATM parvenant sur les N'c'n lignes entrantes du commutateur ATM.

Selon un second aspect de l'invention, un coeur de commutation synchrone par groupes (CCSG) comprend N' groupes de m lignes de sortie, au moins N'm lignes d'entrée, et k étages de commutateurs synchrones élémentaires par groupes, N',m et k étant des entiers avec N'≥2 et m≥2. Chaque CSEG comporte au moins un et au plus p concentrateurs élémentaires à pm entrées et m sorties, p étant un entier au moins égal à 2 tel que N'≤p^k, les m sorties de chaque concentrateur élémentaire constituant un groupe de m sorties du CSEG et chaque entrée du CSEG étant reliée à une entrée respective de chacun de ses concentrateurs élémentaires par l'intermédiaire d'un filtre d'élimination de cellules ATM non destinées à une sortie dudit concentrateur. Les CSEG des étages successifs sont interconnectés par des groupes de m lignes reliant chacun un groupe de m sorties d'un CSEG à m entrées d'un CSEG de l'étage suivant, les lignes d'entrée du CCSG étant reliées à des entrées des CSEG du premier étage, et les groupes de m sorties des CSEG du dernier étage étant respectivement reliés aux N' groupes de m lignes de sortie du CCSG.

Dans la suite de l'exposé, on utilisera l'abréviation CCSG pour désigner un coeur de commutation synchrone par groupes, et l'abréviation CSEG pour désigner un commutateur synchrone élémentaire par groupes. Un CCSG est caractérisé par les propriétés 3A à 3E suivantes :

3A - les cellules ATM sont alignées à l'entrée du CCSG, c'est-à-dire qu'elles entrent au CCSG en même temps ;

3B - le temps de traversée du CCSG pour toutes les cellules est le même (synchronisme), ce qui implique notamment l'absence de files d'attente intermédiaires ;

3C - chaque cellule porte en elle suffisamment d'information (au besoin par un préfixe accolé à la cellule ATM standard) pour désigner le groupe (ou éventuellement les groupes, dans le cas d'une diffusion) de lignes de sortie vers laquelle elle doit être acheminée ;

3D - une telle cellule peut être injectée dans n'importe quelle ligne d'entrée de n'importe quel groupe. Autrement dit, à chaque instant les cellules dans un groupe sont commutées à titre individuel vers des groupes de sortie a priori différents ;

3E - chaque cellule est acheminée vers une ligne indéterminée appartenant au groupe de sortie désigné. Autrement dit, pour le CCSG seule importe l'identité de groupe, l'identité d'une ligne dans un groupe étant non significative.

Le commutateur ATM selon l'invention respecte les principes 2A, 2B, 2C, 2D mentionnés ci-dessus. Par contre, il diffère du K.O.-bis en ce qui concerne les points 2E, 2F et 2G. En effet, il est proposé de supprimer à la fois l'algorithme de contrôle K.O. global préalable, et l'algorithme d'attribution des chemins. Toutes les cellules sont envoyées au réseau d'interconnexion constitué par les CCSG après un brassage aléatoire, et les cellules excédentaires sont éliminées au fur et à mesure à l'intérieur même du réseau d'interconnexion. De plus, ledit réseau ne suit pas une topologie de Clos en 3 étages ; il est typiquement un réseau Banyan de type quelconque et de dimension quelconque, dont les mailles sont les groupes de lignes en nombre suffisant pour que le principe K.O. de multiplexage statistique à faible perte s'applique à chaque étage. La présente invention fait une utilisation récursive du principe K.O. dans une architecture Banyan ou Delta de groupes de lignes et de CSEG. Grâce au brassage aléatoire préalable cela est possible avec un taux de perte de cellules très faible. Il sera montré ci-après que cette architecture permet intrinsèquement les diffusions quelconques ; qu'elle permet une taille maximale sans limite car indépendante de la technologie ; que les gammes de commutateurs suivent un facteur de croissance optimum ; qu'en outre la mise de départ pour une taille maximale donnée est relativement faible.

D'autres particularités et avantages de la présente invention apparaîtront dans la description ci-après d'exemples de réalisation préférés mais non limitatifs, en référence aux dessins annexés, dans lesquels :

- la figure 1 est un schéma d'ensemble d'un commutateur ATM selon l'invention ;
- la figure 2 est un schéma d'un exemple de réalisation d'une matrice m x n de commutation par lignes ;
- la figure 3 est un schéma d'un CSEG à p groupes de m lignes d'entrée et p groupes de m lignes de sortie ;
- la figure 4 est un schéma illustrant la construction récursive d'un commutateur ATM selon l'invention ;
- la figure 5 est un schéma d'un CCSG à huit groupes de lignes d'entrée et huit groupes de lignes de sortie ;
- les figures 6 à 8 sont des schémas illustrant des configurations possibles d'un étage d'égalisation de trafic dans un commutateur ATM selon l'invention ;
- la figure 9 est un schéma d'un commutateur ATM selon l'invention à 128 lignes entrantes et 128 lignes sortantes ;
- la figure 10 montre la structure d'une capsule de données circulant dans un commutateur ATM selon l'invention ;
- la figure 11 est un schéma d'un élément de diffusion et de filtrage utilisable dans les CSEG ;
- la figure 12 montre des chronogrammes illustrant le fonctionnement de l'élément de diffusion et de filtrage de la figure 11 ;
- la figure 13 est une autre représentation du commutateur ATM de la figure 9 ;
- les figures 14 et 15 montrent des versions incomplètes du CCSG représenté sur la figure 5 ;
- la figure 16 est un schéma d'un premier exemple de réalisation d'un concentrateur utilisable dans un commutateur ATM selon l'invention ;
- la figure 17 est un schéma d'un élément binaire de commutation du concentrateur de la figure 16 ;
- la figure 18 montre un égaliseur de trafic utilisable dans un commutateur ATM selon l'invention ;
- la figure 19 est un schéma d'un second exemple de réalisation d'un concentrateur utilisable dans un commutateur ATM selon l'invention.

On va d'abord décrire un commutateur ATM selon l'invention utilisé à sa capacité complète, et on examinera plus loin comment faire croître la capacité d'un tel commutateur sans perturber le trafic.

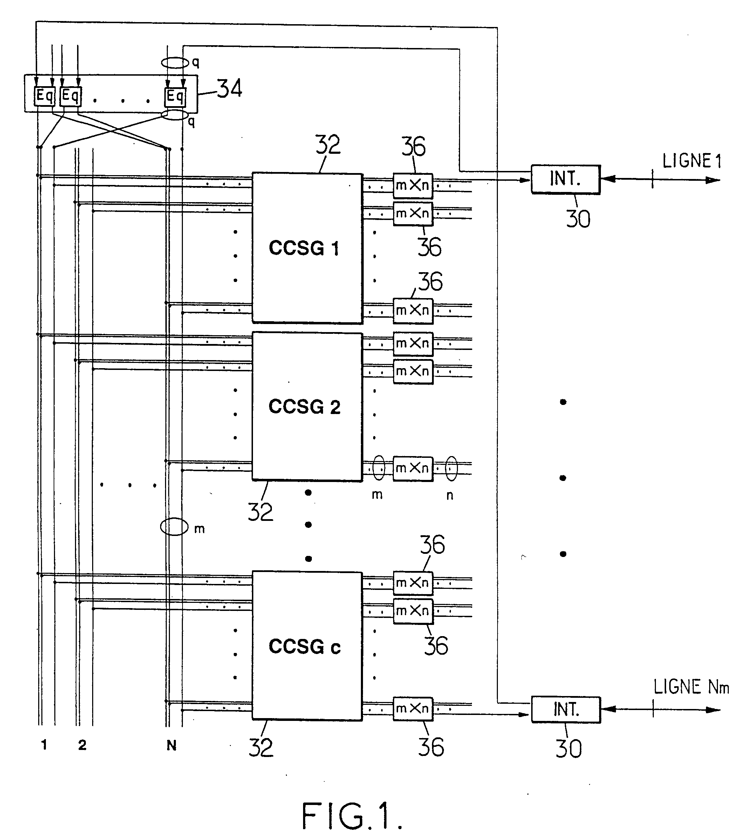

Le commutateur représenté sur la figure 1 gère Nm lignes bidirectionnelles, c'est-à-dire Nm lignes entrantes et Nm lignes sortantes. Une interface 30 est prévue pour chaque ligne bidirectionnelle, afin de séparer les lignes entrantes et sortantes et d'effectuer certains traitements sur les cellules ATM à commuter.

Le commutateur comprend un réseau synchrone d'interconnexion constitué par c CCSG 32 ayant chacun N groupes de m lignes d'entrée et N groupes de m lignes de sortie. Chaque ligne d'entrée de chaque CCSG est reliée à une interface ligne 30 par l'intermédiaire d'un étage 34 d'égalisation de trafic. A chaque temps d'arrivée de cellule, les Nm lignes d'entrée de chaque CCSG reçoivent de façon synchrone les cellules ATM parvenant sur les Nm lignes entrantes de commutateur. Chaque groupe de m lignes de sortie de chaque CCSG est associé à une matrice respective de commutation par lignes 36 assurant une commutation de m entrées vers n sorties. Chaque matrice 36 a ses m entrées respectivement reliées aux m lignes du groupe associé. Chacune de ses n sorties est reliée à une interface ligne respective 30 pour acheminer les cellules reçues vers la ligne sortante destinataire.

Chaque CCSG 32 effectue une commutation sur la seule base de l'identité du groupe de lignes de sortie. La différenciation entre les différentes lignes d'un même groupe est assurée par les matrices 36. Dans l'exemple de la figure 1, on a m=c.n. Les matrices 36 réalisent donc un facteur de concentration entier c, et chaque groupe de m lignes de sortie d'un CCSG ne porte qu'un trafic maximum correspondant à m/c Erlang. Cette réduction de trafic, correspondant à une expansion du réseau, dépend de la valeur de m.

Selon le facteur de concentration/expansion désiré et/ou permis par la conception globale du commutateur, on peut choisir de réaliser des matrices terminales 36 de taille 64x32, 48x16 ou 32x8 par exemple. Les différentes méthodes connues pour la conception d'une matrice ATM (partage de mémoire et/ou partage de temps, réseau d'interconnexion, Knockout...) peuvent être adaptées pour réaliser les matrices 36 dans la présente architecture. L'adaptation consiste à respecter les spécifications suivantes :

- les lignes d'entrée sont synchronisées sur les débuts des cellules ;
- une cellule appartenant à toute connexion ATM de toute ligne de sortie peut se trouver sur l'une quelconque des lignes d'entrée ;
- le fonctionnement de la matrice doit être synchrone jusqu'à l'écriture dans la ou les files d'attente précédant l'interface 30, afin de respecter les séquences de cellules dans les connexions ATM ; et
- chaque cellule doit porter en elle l'information nécessaire pour sa mise en forme finale conformément aux normes définies pour les interfaces externes, en particulier en ce qui concerne les champs VPI/VCI de l'en-tête ATM ("Virtual Path Identifier/Virtual Channel Identifier").

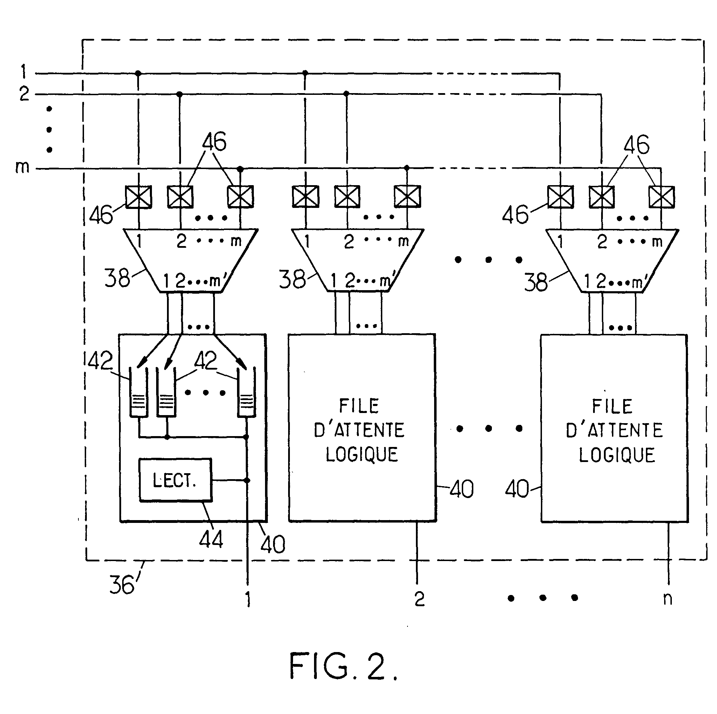

A titre d'exemple, la figure 2 montre une réalisation d'une matrice terminale 36 de type Knockout. Dans cette réalisation, la matrice est un ensemble de n multiplexeurs respectivement associés aux n sorties. Chaque multiplexeur comprend un concentrateur 38 à m entrées et m' sorties, et une file d'attente logique 40. Chaque file d'attente logique 40 comprend m' files d'attente physiques 42 reliées chacune à l'une des m' sorties du concentrateur associé 38, et une logique de lecture 44 qui réalise une lecture à tour de rôle dans les files d'attente physiques 42 de façon à respecter un protocole premier entré-premier sorti (FIFO) en sortie. Chaque entrée de la matrice terminale 36 est reliée à une entrée respective de chacun des n concentrateurs 38 par l'intermédiaire de filtres respectifs 46 qui éliminent, à l'entrée de chaque concentrateur 38, les cellules ATM qui ne sont pas destinées à la sortie correspondante de la matrice 36.

La taille des concentrateurs 38 est par exemple m=32, m'=16. Conformément au principe Knockout, la perte due à la contention dans les concentrateurs 38 est alors négligeable.

Les CCSG sont réalisés à partir de concentrateurs élémentaires ayant chacun pm entrées et m sorties. Le nombre N de groupes de lignes commutées par chaque CCSG est de la forme $p^k$. Le CCSG se compose de k étages comportant chacun $p^{k-1}$ CSEG ayant chacun p groupes de m entrées et p groupes de m sorties.

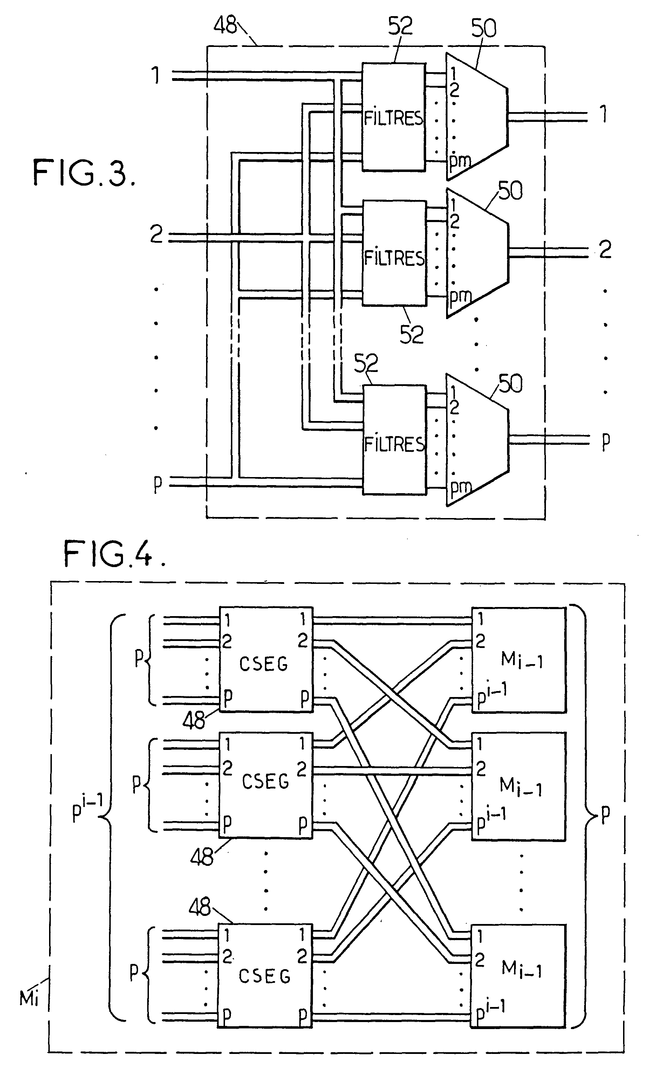

La structure d'un CSEG 48 est représentée sur la figure 3. Le CSEG 48 comprend p concentrateurs élémentaires 50 chacun ayant ses m sorties constituant un groupe de m sorties au CSEG. Chaque entrée du CSEG est reliée à une entrée de chaque concentrateur élémentaire 50 par l'intermédiaire d'un filtre respectif 52. Pour simplifier la figure 3, on a représenté un banc de pm filtres 52 en amont de chaque concentrateur 50. Chaque filtre d'un tel banc traite une ligne d'entrée du concentrateur pour éliminer les cellules ATM qui ne sont pas destinées à son groupe de m sorties.

La figure 4 illustre comment construire de façon récursive l'architecture d'un commutateur ATM selon l'invention. On définit d'abord un module $M_0$ qui correspond à une matrice terminale de commutation telle que celle représentée sur la figure 2. Le module $M_0$ a donc $p^0=1$ groupe de m entrées et $p^0.n=n$ sorties. Pour i>0, un module $M_i$ est construit à partir de $p^{i-1}$ CSEG 48 et de p modules $M_{i-1}$. Les différents groupes de m entrées de chaque module $M_{i-1}$ sont reliés chacun à un groupe de m sorties d'un CSEG respectif. On peut vérifier que le module $M_i$ comporte $p^i$ groupes de m entrées et $p^i.n$ sorties, une cellule ATM parvenant sur l'une quelconque des $p^i.m$ entrées pouvant être acheminée vers l'une quelconque des $p^i.n$ sorties. Les CSEG d'un module $M_i$ sont interconnectés entre eux suivant un réseau Banyan auto-acheminant (c'est-à-dire un réseau Delta d'ordre p) à i étages dont les mailles sont constituées par des groupes de m lignes, chaque étage comportant $p^{i-1}$ CSEG. Pour i=k, ce réseau des CSEG constitue un CCSG à N groupes de lignes d'entrée et N groupes de lignes de sortie.

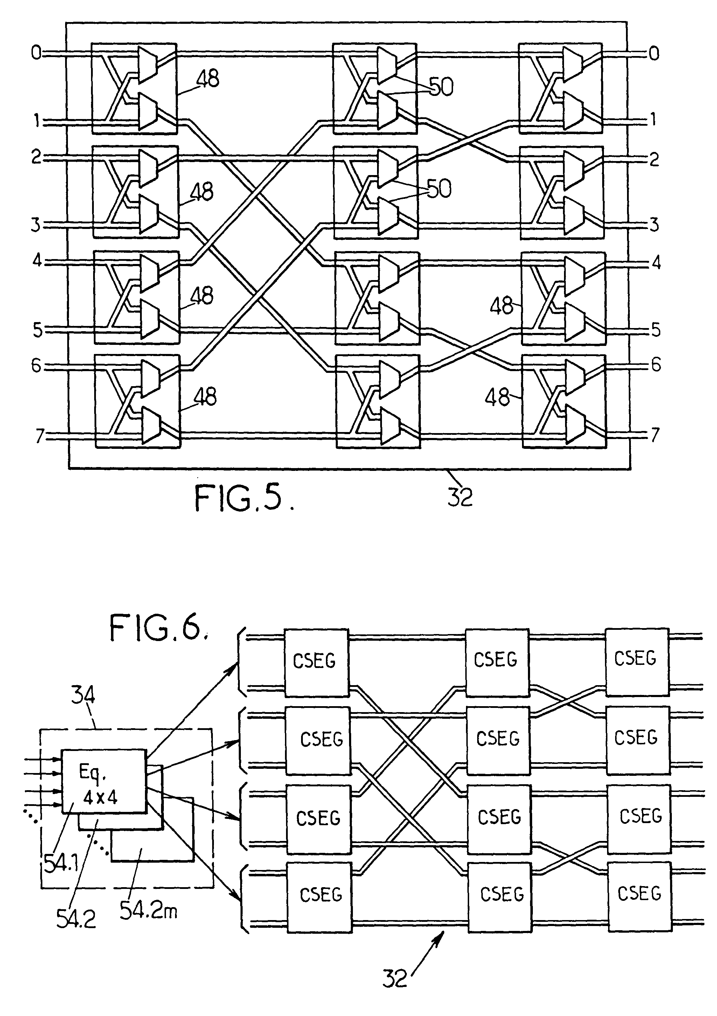

La figure 5 montre un tel CCSG 32 dans le cas particulier p=2, k=3 (N=8). Les bancs de filtres 52 associés aux concentrateurs 50 ne sont pas représentés pour simplifier la figure. On peut vérifier que, quelle que soit la ligne d'entrée où parvient une cellule ATM, il existe un chemin permettant d'acheminer cette cellule vers un groupe quelconque de lignes de sortie, et que ce chemin est unique si on le considère comme une succession de groupes, les groupes de lignes constituant les mailles du réseau Delta.

Les connexions internes entre les étages de CSEG ont toutes les mêmes caractéristiques, c'est-à-dire que chaque liaison transporte un nombre fixe m de flux individuels de même débit. Ces flux peuvent être mis en parallèle ou multiplexés de façon totale ou partielle selon les possibilités technologiques.

Pour analyser les performances du CCSG en termes de perte de cellules, on rappelle ici, sous une forme légèrement différente, les calculs de perte faits dans l'article précité de Y.S. YEH et al. Dans ces calculs, on ne considère pour simplifier que des connexions point à point. Cependant, les taux de perte de cellules obtenus sont valables quel que soit le nombre des arbres de diffusion. Pour s'en convaincre il suffit de remarquer, en observant l'exemple de la figure 5, que :

- les cellules entrant dans chaque concentrateur à chaque instant sont toutes différentes: il n'y a pas d'auto-corrélation spatiale. L'auto-corrélation temporelle est aussi éliminée car il n'y a pas de diffusion à l'intérieur d'une même interface physique ;

- le trafic sortant du commutateur étant indépendant de la nature des connexions, plus le trafic de diffusion est grand, moins il y a de trafic entrant, et plus faibles sont les taux de perte.

On considère un concentrateur de M sources indépendantes ayant m sorties. Les cellules concernées sont celles destinées à l'une des m sorties, les autres étant éliminées par le banc de filtres situé en amont du concentrateur et n'entrant pas en compte dans le calcul de perte. Avec ces hypothèses, si les trafics individuels des sources sont égaux (ce qui est connu comme le pire cas au point de vue de la perte de cellules), la probabilité P(i) de présence simultanée de i cellules est donnée par la formule binômiale (où C(M,i) désigne le coefficient binômial M!/[i!(M-i)!]) :

$$P(i) = C(M,i).\alpha^i.(1-\alpha)^{M-i}$$

où $\alpha$ représente le trafic individuel de chaque ligne entrante, c'est-à-dire la probabilité d'apparition d'une cellule sur une ligne individuelle. Si on s'intéresse à une valeur fixe de $M\alpha=\rho$, quel que soit M ($\rho$ est le débit moyen d'un groupe de m lignes sortantes), cette formule permet d'écrire:

$$P(i) = C(M,i).(\rho/M)^i.(1-(\rho/M))^{M-i}$$

Si l'on observe qu'il y a perte de (i-m) cellules dans le concentrateur pour tout i>m, la perte de cellules moyenne s'écrit :

$$Perte = \sum_{i=m+1}^{M} ((i-m).P(i))$$

$$= \rho - \sum_{i=0}^{m} (i.P(i)) - m.\left(1 - \sum_{i=0}^{m} P(i)\right)$$

Le taux de perte est donc donné par :

$$TdP(M,m) = Perte/\rho = \left[\rho-m+\sum_{i=0}^{m}((m-i).P(i))\right]/\rho$$

Notons que quand $\rho$ est fixe, et pour M assez grand, la loi binômiale converge vers la loi de Poisson, la suite de probabilités P(i) peut alors être remplacée par :

$$P(i) = e^{-\rho}.(\rho^i/i!)$$

Cela donne une valeur majorante et asymptotique de la perte de cellules, indépendante de M.

Les tableaux I à III donnent les taux de perte dans des concentrateurs de différentes tailles, avec l'hypothèse d'indépendance des sources, et p=2. Ce sont respectivement: concentrateur 128 vers 64 (avec un trafic individuel des lignes sortantes voisin de 0,5 Erlang), concentrateur 96 vers 48 (trafic individuel sortant voisin de 0,33) et concentrateur 64 vers 32 (trafic individuel sortant voisin de 0,25). Les valeurs sont considérées comme négligeables quand elles sont inférieures à $10^{-16}$.

Le tableau I montre que la réalisation d'un concentrateur 128 vers 64 permet de concevoir une famille de commutateurs en se basant sur les valeurs p=2, c=2, m=64, n=32, avec un excellent taux de perte de cellules. Dans ce cas, on doit utiliser des matrices terminales de commutation par lignes de taille 64x32. Le réseau présente alors un taux d'expansion égal à 2.

Le tableau II correspond au taux d'expansion 3, utilisant des matrices terminales 48x16.

Le tableau III correspond aux concentrateurs 64x32 et matrices 32x8, les plus simples à construire, au prix du taux d'expansion 4. Dans les trois tableaux, les pertes de cellules correspondent aux trafics moyens de l'interface externe de 0,7, 0,8, 0,9 et 1 Erlang.

Cependant, les calculs ci-dessus valent seulement pour le taux de perte dans le premier étage d'un CCSG, où l'hypothèse d'indépendance des sources est toujours justifiée. Il reste à montrer que le taux de perte total dans le CCSG (TdP(total)) est aussi acceptable. Or, le CCSG en général comporte plusieurs étages, et pour les étages suivants les sources ne sont plus indépendantes. Le premier étage de diffusion, filtrage et concentration de cellules introduit une certaine corrélation entre elles, et on doit s'attendre à ce que les taux de perte dans les étages suivants soient supérieurs.

Le calcul exact faisant intervenir ladite corrélation est complexe, mais, en supposant que le trafic est réparti de façon homogène sur tous les concentrateurs (ceci est réalisé par les égaliseurs de trafic), on peut évaluer une valeur majorante du taux de perte total :

$$TdP(total) < \sum_{i=1}^{k}(TdP(p^i.m,m))$$

**TABLEAU I**

| trafic ligne sortant ρ/m | 0,35 E | 0,4 E | 0,45 E | 0,5 E |
|---|---|---|---|---|
| trafic groupe 64 sortant ρ | 22,4 E | 25,6 E | 28,8 E | 32 E |
| taux de perte (128,64) | négligeable | $4,6.10^{-16}$ | $1,3.10^{-12}$ | $1,5.10^{-11}$ |

**TABLEAU II**

| trafic ligne sortant ρ/m | 0,23 E | 0,26 E | 0,3 E | 0,33 E |
|---|---|---|---|---|
| trafic groupe 48 sortant ρ | 11,2 E | 12,8 E | 14,4 E | 16 E |
| taux de perte (96,48) | négligeable | négligeable | négligeable | $8,4.10^{-16}$ |

**TABLEAU III**

| trafic ligne sortant ρ/m | 0,175 E | 0,2 E | 0,225 E | 0,25 E |
|---|---|---|---|---|
| trafic groupe 32 sortant ρ | 5,6 E | 6,4 E | 7,2 E | 8 E |
| taux de perte (64,32) | négligeable | négligeable | $3,8.10^{-16}$ | $7,4.10^{-15}$ |

Les tableaux IV à VI donnent les valeurs majorantes des taux de perte dans trois CCSG de k=4 étages chacun avec p=2. Le tableau IV correspond à une expansion 2 et à 1024 interfaces externes. Le tableau V correspond à une expansion 3 et à 768 interfaces externes. Le tableau VI correspond à une expansion 4 et à 512 interfaces externes.

8

Les valeurs de trafic utilisées sont les mêmes que celles utilisées aux tableaux I à III, à savoir correspondant à 0,7, 0,8, 0,9 et 1 Erlang sur une interface externe.

La dernière ligne de chaque tableau fournit la valeur asymptotique des termes supérieurs, cela permet une estimation rapide de valeurs majorantes des taux de perte dans les CCSG de plus grandes tailles : pour chaque étage supplémentaire il suffit d'ajouter une fois la valeur indiquée du taux asymptotique.

Si le commutateur ATM ne comporte pas d'étage d'égalisation de trafic en amont des CCSG 32, les calculs ci-dessus ne sont pas valables parce que l'hypothèse d'une même charge moyenne de trafic pour tous les concentrateurs n'est plus vérifiée. Dans certains cas, le déséquilibre "naturel" des trafics sur les groupes de mailles internes au CCSG peut rendre le taux de blocage du commutateur non acceptable. Néanmoins, pour des concentrateurs de taille relativement grande et/ou pour des hypothèses de débit individuel moyen plus faible, il se peut que ce taux de blocage descende à un niveau très faible, en raison de la loi des grands nombres.

L'étage d'égalisation de trafic 34 tel qu'illustré sur la figure 1, vise à éliminer ou du moins à réduire fortement ce facteur de blocage. Dans un CCSG à N groupes de m lignes utilisant des concentrateurs de pm vers m, pour que le trafic soit homogène dans les mailles du CCSG, il est nécessaire et suffisant que chaque CSEG ou concentrateur du premier étage reçoive une partie statistiquement égale du trafic total destiné à chaque groupe de sortie du CCSG.

**TABLEAU IV**

| Charge d'un groupe de 64 | 22,4 E | 25,6 E | 28,8 E | 32 E |
|---|---|---|---|---|
| Taux de perte total < | $7,2.10^{-15}$ | $2,2.10^{-12}$ | $2,3.10^{-10}$ | $1,1.10^{-8}$ |
| Taux asymptotique | $1,6.10^{-14}$ | $3,2.10^{-12}$ | $2,9.10^{-10}$ | $1,2.10^{-8}$ |

**TABLEAU V**

| Charge d'un groupe de 48 | 11,2 E | 12,8 E | 14,4 E | 16 E |
|---|---|---|---|---|
| Taux de perte total < | négligeable | $4,5.10^{-16}$ | $4,7.10^{-14}$ | $1,8.10^{-12}$ |
| Taux asymptotique | négligeable | $1,7.10^{-15}$ | $7,0.10^{-14}$ | $2,5.10^{-12}$ |

**TABLEAU VI**

| Charge d'un groupe de 32 | 5,6 E | 6,4 E | 7,2 E | 8 E |
|---|---|---|---|---|
| Taux de perte total < | négligeable | $1,4.10^{-14}$ | $3,1.10^{-13}$ | $4,5.10^{-12}$ |
| Taux asymptotique | $2,2.10^{-15}$ | $1,7.10^{-14}$ | $3,7.10^{-13}$ | $5,2.10^{-12}$ |

Chaque égaliseur de trafic devrait donc être connecté à chaque concentrateur du premier étage d'un CCSG. En d'autres termes, chaque égaliseur devrait égaliser le trafic de $N/p=p^{k-1}$ lignes reliées chacune à des CSEG différents du premier étage. Il suffit pour cela d'utiliser pm égaliseurs égalisant chacun les trafics individuels de $q=N/p=p^{k-1}$ lignes. La figure 6 montre un tel agencement de l'étage d'égalisation 34 en amont d'un CCSG 32 conforme à celui de la figure 5 (p=2, k=3, N=8). L'étage 34 comporte 2m égaliseurs 54.1,..., 54.2m ayant chacun q=4 entrées et q=4 sorties reliées chacune à une entrée d'un CSEG respectif du premier étage. L'égalisation de trafic sur les CSEG du premier étage assure l'égalisation du trafic sur les CSEG des étages suivants. Chaque sortie d'un égaliseur est diffusée vers des lignes d'entrée correspondantes des différents CCSG du commutateur ATM, comme l'illustre la figure 1.

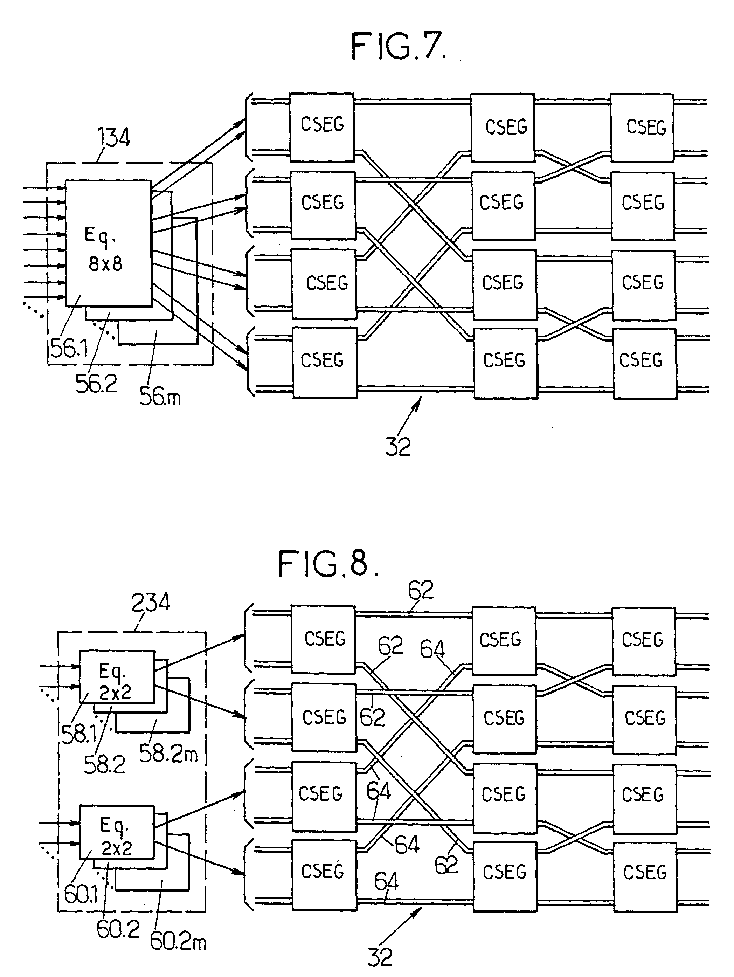

L'égalisation de trafic optimale peut également être réalisée en utilisant pm/y égaliseurs de $q=p^{k-1}.y$ lignes chacun, et en connectant y lignes entre chaque égaliseur et chaque CSEG du premier étage d'un CCSG, pour tout entier y divisant pm. La figure 7 montre une telle configuration de l'étage d'égalisation de trafic 134, avec le même CCSG que dans les figures 5 et 6 (p=2, k=3, N=8), et avec y=2. L'étage 134 comporte m égaliseurs 56.1,...,56.m ayant chacun q=8 entrées et q=8 sorties reliées par paires à des entrées d'un CSEG respectif du premier étage.

Une autre possibilité est de prévoir une égalisation de trafic partielle. Dans ce cas, on répartit les CSEG du premier étage d'un CCSG en Z ensembles, et on agence l'étage d'égalisation de façon à égaliser les trafics reçus par les différents CSEG de chaque ensemble. La figure 8 montre une telle configuration de l'étage d'égalisation de trafic 234, avec le même CCSG que dans les figures 5 à 7 (p=2, k=3, N=8), dont les CSEG du premier étage sont répartis en Z=2 ensembles. L'étage 234 comporte 4m égaliseurs 58.1,...,58.2m et 60.1,...,60.2m ayant chacun 2 entrées et 2 sorties. Les égaliseurs 58.1,...,58.2m sont associés au premier ensemble de CSEG : les 2 sorties de chacun d'eux sont reliées respectivement à des entrées des 2 CSEG du premier ensemble. De même, les égaliseurs 60.1,...,60.2m sont associés au second ensemble de CSEG. Les CSEG du second étage reçoivent chacun un groupe de m lignes 62 issu d'un CSEG du premier ensemble du premier étage et un groupe de m lignes 64 issu du second ensemble du premier étage. L'égalisation du trafic est donc complète à partir du second étage, et au sein de chaque ensemble de CSEG du premier étage. Seule peut subsister une hétérogénéité entre les trafics passant par les deux ensembles de CSEG du premier étage. Les pertes de cellules pouvant en résulter sont toutefois très peu nombreuses.

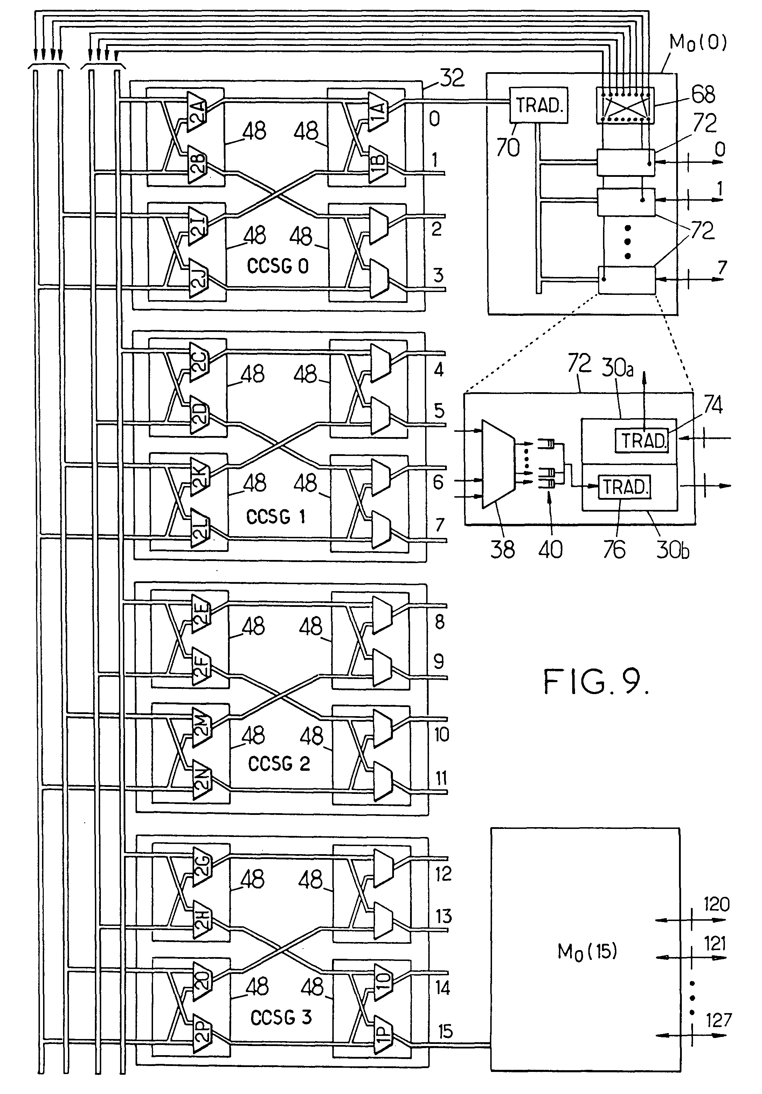

La figure 9 montre un agencement possible d'un commutateur 128x128 selon l'invention, dans le cas p=2, k=2, N=4, m=32, n=8, c=4, q=8. Les filtres de cellules 46 et 52 ne sont pas représentés pour simplifier la figure. Les c=4 CCSG ont un total de cN=16 groupes de lignes de sortie numérotés de 0 à 15 et reliés chacun à un module $M_0$. Outre une matrice terminale de commutation par lignes, chaque module $M_0$ comprend n=8 interfaces ligne, un égaliseur 68 de q=8 lignes et un élément de traduction intermédiaire 70. Pour chaque ligne bidirectionnelle externe, le module $M_0$ comprend une terminaison de ligne 72 regroupant le multiplexeur correspondant de la matrice terminale (filtres 46 non représentés, concentrateur 38 et file d'attente logique 40) et l'interface ligne comportant une interface entrante 30a et une interface sortante 30b. L'interface entrante 30a assure des traitements de mise en forme nécessaires à la transmission ATM. Elle comprend notamment un élément de traduction initiale 74 pour pourvoir à l'acheminement des cellules dans le commutateur.

De même, l'interface sortante 30b comporte un élément 76 de traduction finale pour inscrire les nouveaux champs VPI/VCI dans les cellules sortantes. L'égaliseur 68 d'un module $M_0$ a ses entrées reliées aux 8 lignes entrantes de ce module ; 4 de ses sorties sont reliées à 4 entrées d'un même CSEG 48 du premier étage de chaque CCSG 32 ; et ses 4 autres sorties sont reliées à 4 entrées de l'autre CSEG du premier étage de chaque CCSG (en se référant aux explications données en relation avec la figure 7, on est ici dans le cas y=4 : il y a pm/y=16 égaliseurs 68 de $q=p^{k-1}$. y=8 lignes, à savoir un par module $M_0$).

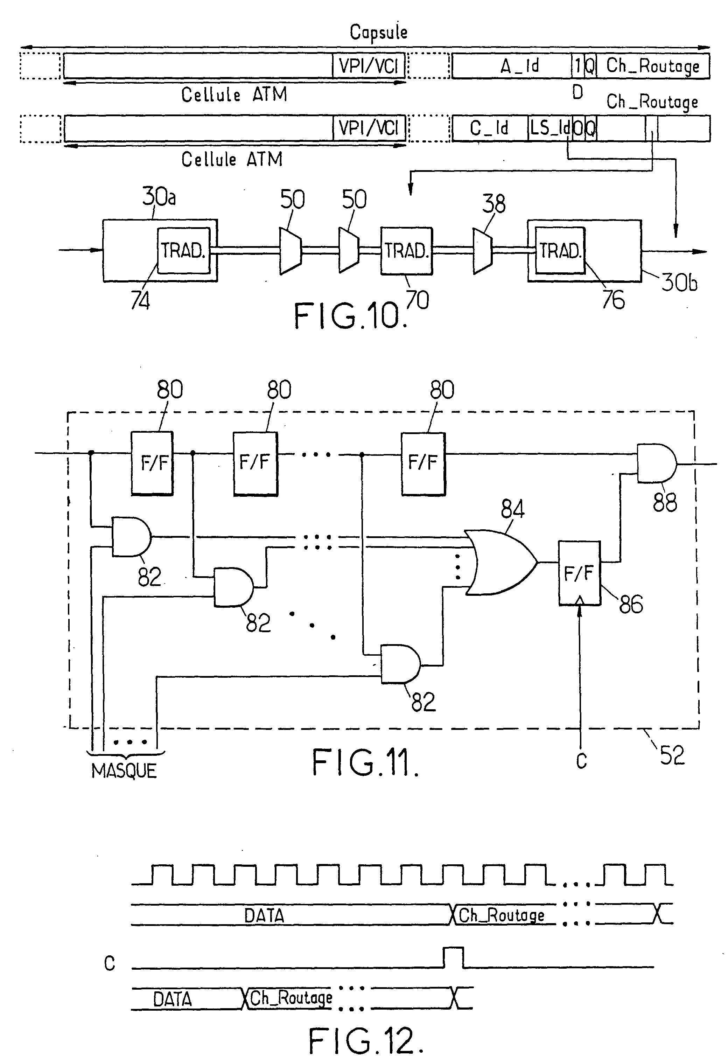

Pour le transfert de chaque cellule ATM au sein du commutateur, on définit un format de paquet qui encapsule la cellule ATM standard. Un tel paquet est ci-après appelé une "capsule". Les informations ajoutées aux cellules dans les capsules conduisent à augmenter soit le débit soit la charge des liaisons internes. La capsule contient des informations sous une forme adéquate pour simplifier la constitution des filtres 46, 52 qui sont en nombre relativement important dans le commutateur. Ces informations sont inscrites par les éléments 74, 70 de traduction initiale et/ou intermédiaire. Un exemple de format de capsule est illustré sur la figure 10 où seuls les champs utiles à l'acheminement sont indiqués. Des champs supplémentaires pourraient être inclus (par exemple dans les zones dessinées en pointillés) pour aider à la réalisation d'autres fonctions. Ces champs supplémentaires pourraient contenir des données de test ou de contrôle, ou des codes redondants cycliques (CRC) pour la détection et/ou la correction d'erreurs.

La figure 10 illustre la structure d'une capsule dans le cas d'une cellule à diffuser vers plusieurs lignes sortantes (diagramme supérieur) et dans le cas d'une connexion point à point (second diagramme). La présence d'un 1 ou d'un 0 dans un champ D d'un bit permet de distinguer les deux cas. Le schéma inférieur illustre le trajet suivi par une cellule de l'entrée à la sortie du commutateur.

On appelle module intermédiaire un module $M_i$ au sens de la figure 4, qui comporte des éléments de traduction intermédiaire 70 immédiatement en amont. La présence de cette traduction vient d'une double nécessité : en premier lieu le champ des bits de routage dans les capsules doit être assez court et de longueur fixe : en second lieu, pour permettre une diffusion arbitraire, on doit réserver dans le champ de routage un bit par destination possible. A partir d'une entrée donnée, il n'y a qu'un seul chemin vers un sous-module donné. En conséquence, chaque bit de routage indique en général un module intermédiaire (comme montré sur la figure 10), et non un groupe de lignes précis de ce module. Les deux cas se confondent seulement lorsque le module $M_0$ est défini comme un module intermédiaire, ce qui est le cas dans l'exemple de la figure 9.

La traduction initiale est faite par les éléments 74 au moyen de tables de traduction mémorisées dans les terminaisons de ligne, côté entrant. A partir de l'identité implicite de la ligne et du champ VPI/VCI, le traducteur 74 inscrit dans la capsule à la fois l'identité de la connexion et le champ de routage (Ch_Routage) qui permet d'acheminer la capsule jusqu'à la (ou les, en cas de diffusion) prochaine traduction. Pour assurer une diffusion sans restriction, chaque bit de Ch_Routage représente un module intermédiaire : ce bit est à 1 si le module intermédiaire doit recevoir la capsule en question, et à 0 sinon.

Pour optimiser la mémoire, chaque connexion est associée à un identificateur interne. Cet identificateur (A_Id) est global pour le commutateur dans le cas d'un arbre de diffusion. On peut donc définir librement un grand nombre de connexions point à multipoints (arbres de diffusions), dans les limites imposées par la longueur retenue du champ A_Id. En cas de connexion point à point, l'identificateur interne (C_Id) est local à la ligne sortante, l'identité de la ligne sortante (LS_Id) est définie à l'intérieur du module intermédiaire. Dans la figure 10, le champ VPI/VCI est séparé des autres champs à des fins de clarté. Mais, il y a clairement une redondance qui permet une optimisation éventuelle en réutilisant le même espace pour différents champs, ce qui affecterait légèrement le format de la capsule. Chaque traducteur intermédiaire 70 teste soit le bit Q (qui indique la qualification d'une cellule), soit le même bit (dans Ch_Routage) déjà testé par le filtre du concentrateur immédiatement en amont, pour pouvoir disqualifier les cellules non destinées au module intermédiaire qu'il contrôle. Cela peut être fait en remettant à zéro le champ de routage. Ensuite, connaissant l'identité non ambiguë de la connexion à l'intérieur du module intermédiaire (soit par A_Id soit par LS_Id et C_Id), le traducteur peut recréer le champ de bits de routage jusqu'à la traduction intermédiaire ou finale suivante. Dans le champ de routage créé par la dernière traduction intermédiaire (celle-ci peut être l'unique, comme le montre l'exemple de la figure 9), chaque bit correspond à une ligne sortante. Les fonctions de traduction intermédiaire sont exécutées de manière synchrone.

La traduction finale est faite par les éléments 76 dans les terminaisons de ligne côté sortant. Après avoir qualifié la cellule comme indiqué précédemment, le traducteur 76 inscrit le champ VPI/VCI sortant qu'il calcule en fonction du contenu du champ C_Id ou A_Id.

La figure 11 montre un filtre 52 utilisable sur une ligne d'entrée d'un concentrateur élémentaire d'un CCSG. Si r désigne le nombre de bits du champ de routage Ch_Routage, le filtre 52 comporte un registre à décalage de r bascules D 80 cadencées à l'horloge bit (ligne supérieure de la figure 12). L'entrée du filtre, qui est l'entrée du registre à décalage, reçoit en série une capsule comprenant le champ de routage puis le reste des données de la capsule (DATA sur la seconde ligne de la figure 12). Le filtre 52 comprend en outre r portes ET 82 ayant chacune une entrée connectée à l'entrée d'une bascule D respective 80 et une autre entrée recevant un bit de configuration. Une porte OU 84 a r entrées reliées aux r sorties des portes ET 82. La sortie de la porte OU 84 est reliée à l'entrée d'une autre bascule D 86. Une porte ET 88 a une entrée reliée à la sortie de la dernière bascule 80 du registre à décalage et son autre entrée reliée à la sortie de la bascule 86. La sortie de la porte ET 88 constitue la sortie du filtre 52. La bascule 86 se positionne sur la sortie de la porte OU 84 sur le front montant d'un signal de synchronisation C qui survient lorsque les r bits du champ de routage sont respectivement présents aux entrées des bascules 80 (troisième ligne de la figure 12).

Les r bits de configuration fournis aux portes ET 82 constituent un masque propre au concentrateur en amont duquel est placé le filtre. Au dernier étage avant une traduction intermédiaire, chaque concentrateur a un masque comportant un seul bit de configuration à 1 : celui dont le rang correspond au numéro du module intermédiaire auquel est connecté ledit concentrateur. Par exemple, si r=16 dans le cas de la figure 9, le concentrateur numéroté 1B est associé au masque 0100000000000000. Toute capsule ayant un 1 à la position correspondante dans le champ de routage sera ainsi transmise au concentrateur, avec un retard de r bits comme le montre la dernière ligne de la figure 12. Les autres capsules sont éliminées comme n'étant pas destinées aux sorties du concentrateur. L'élimination consiste en ce que la porte ET 88 met à 0 tous les bits de la capsule. Pour les étages précédents, le fonctionnement est le même, le masque de chaque concentrateur étant défini comme un OU logique des masques associés aux concentrateurs situés en aval dudit concentrateur et connectés à celui-ci. Par exemple, le masque associé aux concentrateurs numérotés 2A et 2I sur la figure 9 est 1100000000000000, celui associé aux concentrateurs 2F et 2N est 0000000000110000...

Le masque est commun à tous les filtres 52 d'un banc placé en amont d'un concentrateur donné. Il peut par exemple être fourni simplement en positionnant des interrupteurs prévus sur une carte portant à la fois le concentrateur et le banc de filtres. Les signaux de synchronisation C sont communs à tous les filtres d'un même étage.

Les filtres 46 prévus dans les matrices terminales 36 en amont des concentrateurs 38 peuvent être de constitution identique à celle des filtres 52 illustrés par la figure 11. La seule différence est que chaque bit de configuration du masque désigne une ligne sortante individuelle et non un module intermédiaire.

On comprendra que d'autres structures de capsule, correspondant à des constitutions de filtre différentes pourraient être adoptées. On peut par exemple rendre les filtres plus simples en contrepartie de champs de routage plus complexes, par une méthode de "consommation d'en-tête". Dans cette méthode, le champ de routage est "consommé" partiellement par chaque filtre le long du chemin jusqu'à sa disparition totale, et à ce moment une nouvelle traduction doit être effectuée. Le bit Q fournit alors au traducteur suivant l'information permettant de distinguer les cellules significatives. Dans la méthode précédente d'acheminement, la valeur du champ de routage est réutilisée pour les concentrateurs des étages situés entre deux traductions. Or, chaque concentrateur, ne prenant qu'une décision binaire, peut être conçu de façon à tester un seul bit du champ de routage, si ce bit lui est dédié. De plus, en observant les masques de différent étages, on peut immédiatement déduire que les concentrateurs qui aboutissent au même sous-module aval peuvent partager le même bit, car ils ont le même masque. La consommation d'en-tête est donc réalisable moyennant un allongement du champ de routage de la capsule de la façon suivante : Prenant le CCSG de la figure 5 comme exemple, 8 bits doivent être réservés pour le dernier étage, 4 bits de plus suffisent pour le second, et 2 bits suffisent pour le premier étage. Les bits d'un étage peuvent être consommés par les concentrateurs dudit étage, à condition que les bits pour le premier étage précèdent (dans le sens de transmission) ceux du second étage. En se basant sur la structure du réseau on peut vérifier facilement une règle générale : l'acheminement à consommation d'en-tête dans un CCSG vers r sous-modules demande 2+4+8...+r=2(r-1) bits dans le champ de routage initial ; l'acheminement dans un commutateur ayant c CCSG demande 2c(r-1) bits dans le champ de routage, c'est-à-dire moins de deux fois ce qui est strictement nécessaire. Dans cette méthode alternative d'acheminement, ni le masque, ni la mémorisation du champ de routage ne sont nécessaires dans les filtres, qui peuvent donc être simplifiés. Les filtres associés à des concentrateurs différents sont différenciés par les signaux de cadencement qui leur sont fournis.

Dans les deux modes d'acheminement exposés ci-dessus, les bancs de filtres 52 ont la même structure quel que soient les concentrateurs auxquels ils sont associés. On peut ainsi définir une unité banalisée comprenant un concentrateur 50 et son banc de filtres associé et constituant une brique de base pour une construction du commutateur qui permet des extensions de capacité sans perturbation de trafic. Une telle unité peut être réalisée sur une seule carte électronique avec des composants non spécifiques, pour des tailles réalistes de concentrateur telles que $p=2$, $m=32$.

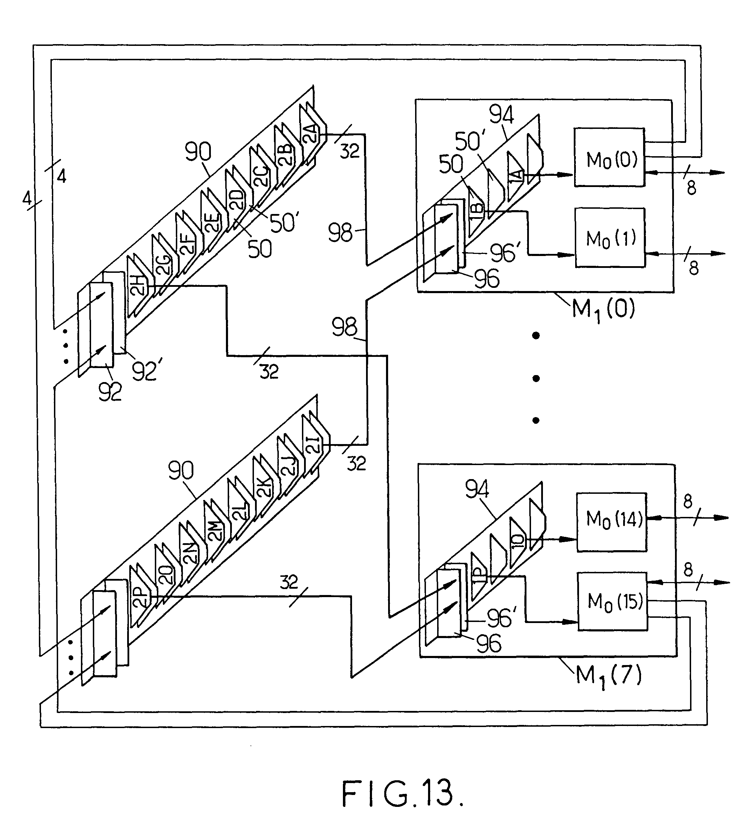

La figure 13 est une autre représentation du commutateur ATM de la figure 9. Ce commutateur correspond à $c=4$ modules $M_2$, comprenant $cN/p=8$ modules $M_1$ et $cN=16$ modules $M_0$. La figure 13 montre la totalité du premier étage des 4 CCSG, répartie en deux panneaux arrières 90. Chaque panneau arrière 90 comporte des bus pour assurer la diffusion passive des capsules vers les bancs de filtres (non représentés) et les concentrateurs qu'il dessert, ce qui correspond à la partie gauche de la figure 9. Le panneau arrière assure en outre la distribution des signaux d'horloge et de synchronisation utiles aux filtres et aux concentrateurs élémentaires. Les unités filtres/concentrateur du premier étage sont branchées directement sur les panneaux arrières 90. Chacune de ces unités est dupliquée (références 50 et 50') à des fins de sécurité. Les panneaux arrières 90 comportent également une carte de réception 92, à laquelle se raccordent les câbles ou fibres optiques venant des égaliseurs de trafic des modules $M_0$, et distribuant les signaux ainsi reçus vers les bus de diffusion. Cette carte de réception est également dupliquée à des fins de sécurité (références 92 et 92'). Un agencement analogue (panneau arrière 94 avec bus de diffusion sur lesquels se raccordent des concentrateurs dupliqués 50 et 50', carte de réception dupliquée 96 et 96') est prévu pour chaque module $M_1$. On voit ainsi que les CCSG peuvent être construits simplement en enfichant des cartes de filtrage et de concentration sur des panneaux arrières précâblés passivement.

L'homogénéité et la simplicité du maillage des CCSG permet de définir des blocs de sécurité de structure identique et très simple, et découplés les uns des autres par des panneaux arrières passifs. Par exemple, la carte de réception 96 du module $M_1(0)$, les concentrateurs 2A et 2I (et les filtres associés), et les câbles ou fibres de raccordement 98 portant $m=32$ lignes constituent un bloc qui est dupliqué pour la sécurité (la duplication des câbles 98 n'est pas dessinée pour faciliter la lecture de la figure). Ces blocs de sécurité locaux permettent aux CCSG d'être extrêmement résistants aux fautes. Pour que la qualité de service soit affectée, il faut qu'un bloc de sécurité soit en faute en même temps que son bloc dupliqué, événement très rare compte tenu de la relativement petite taille des blocs de sécurité et de leur multiplicité. Les matrices de commutation par lignes des modules $M_0$ peuvent ne pas être dupliquées. Pour la sécurité, il est toutefois avantageux de dupliquer les égaliseurs de trafic 68 (pour alimenter les cartes de réception dupliquées 92, 92' des panneaux arrières du premier étage et constituer des blocs de sécurité avec celles-ci), et les cartes de réception des modules $M_0$ comportant les éléments 70 de traduction intermédiaire (pour recevoir les flux dupliqués des concentrateurs du dernier étage des CCSG et constituer des blocs de sécurité avec ces concentrateurs).

Si les CCSG comportent plus que deux étages, on est amené, par rapport à la figure 13, à ajouter un panneau arrière, avec des cartes de réception et de concentration, pour chaque CSEG des étages intermédiaires. Un CSEG complet représente ainsi $p+1=3$ cartes électroniques, ou $2(p+1)=6$ cartes si la duplication est prévue.

Un avantage important du commutateur ATM selon l'invention est qu'il peut être équipé progressivement sans perturber le trafic. On part d'un nombre d'étages donné k, qui permet de fixer le format des capsules. On peut avoir une configuration initiale de c' CCSG (c'≤ c) ayant chacun N' groupes de m lignes de sortie et au moins N' groupes de m lignes d'entrée (N'≤N). Le commutateur admet alors N'c'n lignes bidirectionnelles externes. Si N'<N, chaque CCSG est sous-équipé.

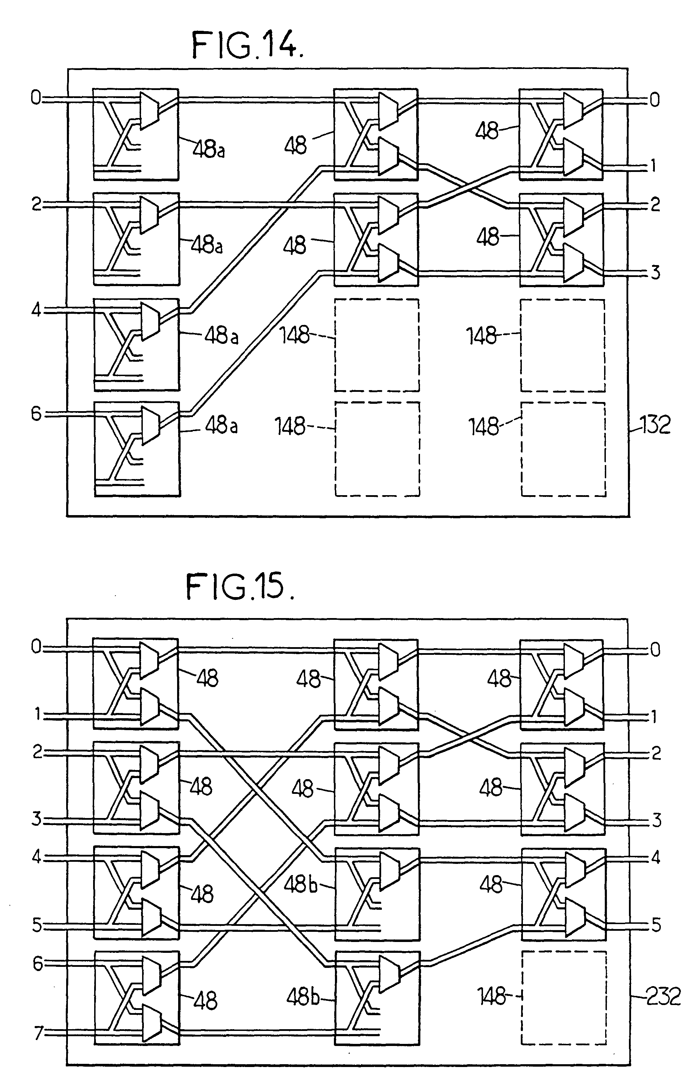

Par exemple, la figure 14 montre un CCSG 132 pour lequel $p=2$ et $k=3$ (soit $N=8$) avec $N'=4$. Les huit concentrateurs élémentaires du deuxième et du troisième étage forment quatre CSEG complets 48. Les quatre concentrateurs élémentaires du premier étage forment quatre CSEG incomplets 48a ayant chacun un groupe de m sorties et un groupe de m entrées. En fait, les CSEG incomplets 48a du premier étage n'opèrent pas de concentration, mais servent seulement à filtrer les capsules destinées aux CSEG des étages suivants.

La figure 15 montre une version étendue 232 du CCSG 132 de la figure 14 : le nombre de groupe de lignes de sortie est passé de N'=4 à N'=6. Le trafic d'entrée, correspondant au débit de N'=6 lignes, est distribué par les égaliseurs sur 8 lignes d'entrée. L'extension est effectuée en insérant 8 concentrateurs supplémentaires à des emplacements appropriés. On a ainsi inséré un CSEG complet 48 au dernier étage pour les groupes de sortie 4 et 5 ; on a complété les quatre CSEG 48 du premier étage ; et on a placé deux autres concentrateurs au deuxième étage pour former deux CSEG incomplets 48b à deux groupes de m entrées et un groupe de m sorties.

En insérant encore 4 concentrateurs aux emplacements restants dans le CCSG 232 de la figure 15, on parvient au CCSG complet 32 représenté sur la figure 5, pour lequel N'=N=8.

On peut ainsi faire croître chaque CCSG à mesure des besoins. Si on a au départ un nombre c' de CCSG inférieur à c=m/n, on peut en outre faire croître le commutateur ATM en ajoutant d'autres CCSG, ce qui s'effectue également sans perturbation de trafic, par insertion de cartes de concentration.

Dans certains cas, des panneaux arrières de diffusion et leurs cartes de réception peuvent également être mis en place progressivement. Les références 148 sur les figures 14 et 15 montrent les emplacements vacants pour recevoir de tels panneaux.

A titre d'illustration, on considère en référence à la figure 10 un format de capsule ayant un champ Ch_Routage de 32 bits, un champ A_Id de 24 bits pour les cellules à diffuser, un champ LS_Id de 10 bits et un champ C_Id de 14 bits pour les connexions point à point. Ce format suppose les options techniques suivantes :

- au maximum 32 modules intermédiaires de 1024 lignes (32 768 lignes) peuvent être identifiés avec 10 bits de LS_Id et 32 bits dans le champ de routage ;
- à cause du champ de routage de 32 bits, chaque traduction (initiale ou intermédiaire) permet un acheminement vers un ensemble de 32 modules intermédiaires. Ainsi, avec un étage de traducteurs intermédiaires on peut réaliser des commutateurs de 1024 lignes au maximum (32 modules de 32 lignes). Pour aller jusqu'à 32 768 lignes, on doit installer deux étages de traduction intermédiaire.
- on admet jusqu'à 16384 connexions point à point pour chaque ligne externe (le C_Id est de 14 bits) ;
- on admet jusqu'à 16 millions d'arbres de diffusion pour un commutateur (le champ A_Id est de 24 bits). Bien entendu, ce nombre peut être réduit pour économiser les mémoires de traduction.

Il reste à choisir les paramètres m, n,c (=m/n) q et p qui caractérisent une architecture concrète. On prend par exemple m=32, n=8, c=4, p=2 et q=8. Pour simplifier le problème du contrôle, l'égaliseur de trafic et le traducteur intermédiaire peuvent être localisés dans les modules $M_0$ comme le montre la figure 9. Dans ce cas, les filtres terminaux 46 ne travaillent que sur 8 bits. Les mêmes composants peuvent alors être utilisés pour construire les commutateurs sans blocage suivants:

- une famille de commutateurs de taille maximum 32x32 lignes, grâce à 4 modules $M_0$ de 8 lignes interconnectés directement. Pour cette famille, ni les CCSG, ni les traducteurs intermédiaires, ni les égaliseurs de trafic ne sont nécessaires, le traducteur initial pouvant fournir directement un champ de routage suffisant de 32 bits ;
- une famille de commutateurs de taille maximum 64x64 lignes, avec k=1 étage de concentration. Dans ce cas, les égaliseurs de trafic ne sont pas utiles. Les traducteurs intermédiaires et les traducteurs initiaux génèrent chacun 8 bits du champ de routage ;
- une famille de commutateurs de taille maximum 128x128 lignes (cas des figures 9 et 13). Dans ce cas, quatre lignes venant d'un module $M_0$ peuvent être multiplexées ensemble pour aller vers les premiers étages des CCSG, car $y=q/p^{k-1}=4$ (cf. figure 7). Le traducteur initial génère 16 bits du champ de routage ;
- une famille de commutateurs de taille maximum 256x256 lignes en utilisant un étage supplémentaire de concentrateurs dans les CCSG. Le traducteur initial remplit les 32 bits du champ de routage. Deux lignes connectant un module $M_0$ et les CCSG peuvent être multiplexées, car $y=q/p^{k-1}=2$ dans ce cas.

On peut voir comment aller plus loin à partir de cette architecture : dans le cas de la figure 9, les traducteurs intermédiaires 70 générant seulement 8 bits sont sous-utilisés. En les déplaçant des modules $M_0$ vers les modules de type $M_2$ (c'est-à-dire avant les deux derniers étages de concentration), on sera capable de générer les 32 bits de routage pour le filtrage dans les terminaisons de lignes. On peut alors construire :

- une famille de commutateurs de taille maximum 512x512 lignes (k=4). Maintenant une seule ligne relie un module $M_0$ et chaque concentrateur d'un CCSG dans le plan de distribution vers les CCSG. Le commutateur reste strictement sans blocage ;
- une famille de commutateurs de taille maximum 1024x1024 lignes (k=5). Ils ne seront plus sans blocage (sauf si on augmente la taille q des égaliseurs). Mais une égalisation partielle est réalisée comme expliqué en référence à la figure 8. Le taux de blocage reste extrêmement faible.

Pour estimer le coût de chaque extension, on peut remarquer que les hypothèses utilisées dans cet exemple demandent une technologie faiblement exigeante et réalisable avec des composants électroniques usuels non spécifiques. Grossièrement, on peut estimer qu'il faut 2,5 cartes électroniques par ligne dans un module $M_0$ (traductions et transmission comprises) et 1 carte par concentrateur, filtrage compris. A cela, il faut ajouter 1 carte auxiliaire de réception pour p=2 cartes de concentration dans les CSEG. A l'aide des figures 5 et 9, on peut voir immédiatement que chaque étage de concentration ajoute 1,5 cartes pour 8 lignes externes. Les CCSG comportent, au maximum de leur capacité, un total de ckN concentrateurs élémentaires, soit k/n par ligne externe. Ainsi, par exemple, la configuration assez importante de 512x512 demande seulement 3,25 cartes par ligne externe. Ce chiffre est de l'ordre de 4 cartes quand la duplication du réseau est réalisée pour améliorer la résistance aux fautes. Un tel commutateur peut se loger dans une salle d'environ 30 m$^2$, en estimant à 1m$^2$ l'occupation au sol d'une armoire de 80 cartes.

Avec les mêmes briques de base et un étage supplémentaire de traduction, l'architecture peut s'étendre jusqu'à 32 678 lignes avant de rencontrer la limite du format de transmission interne choisi. Un tel commutateur fait de préférence appel à une intégration plus poussée, par exemple : une carte concentrateur de 128 vers 64, des matrices 64x32 avec une carte par terminaison de ligne, une égalisation de trafic 32x32, une transmission interne banalisée de 4 lignes multiplexées. Cela est tout à fait réaliste pour la technologie actuelle des circuits intégrés spécifiques. Un tel réseau est sans blocage jusqu'à la taille de 1024x1024, et le taux de blocage est totalement négligeable au-delà de cette taille. Une estimation grossière analogue à celle faite ci-dessus montre qu'il y a alors moins de 2 cartes par ligne externe au total, terminaisons de ligne et duplication du réseau comprises. Cela correspondrait à une occupation au sol d'environ 800 m$^2$ pour un commutateur 32768x32768.

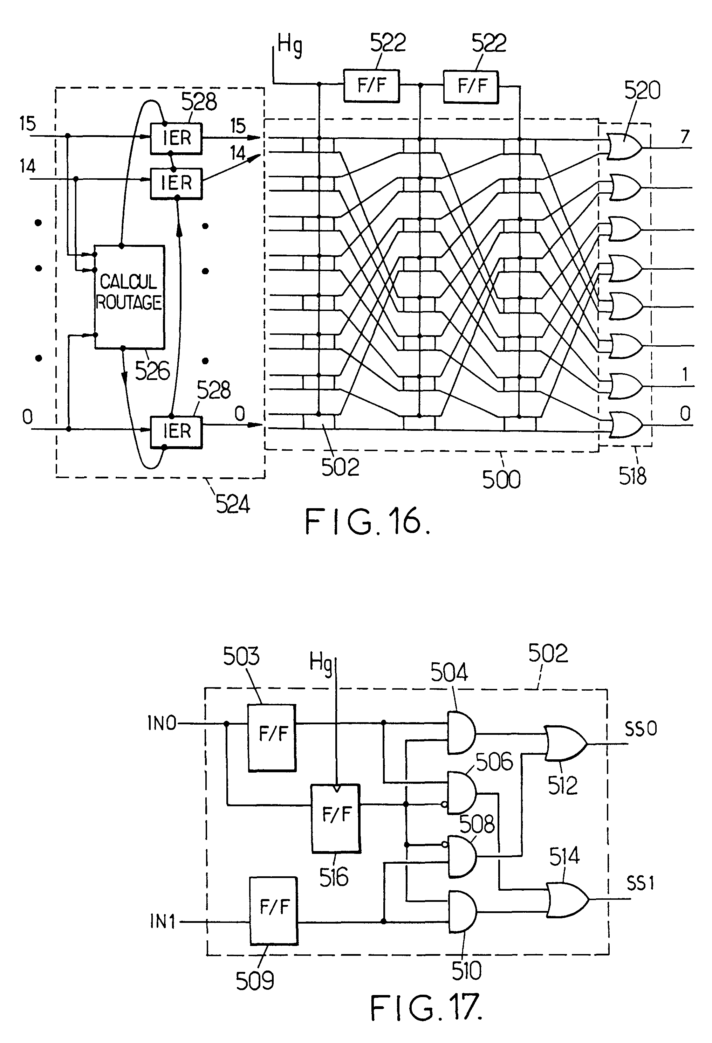

La figure 16 montre un exemple de concentrateur à $2^K$ entrées et $2^L$ sorties utilisable comme concentrateur élémentaire 50 dans les CCSG 32 ou comme concentrateur 38 dans les matrices de commutation par lignes 36. La figure 16 correspond au cas K=4, L=3, soit un facteur de concentration de $2^{K-L}=2$. Il comprend un réseau Oméga inversé 500 à $2^K$ entrées et L étages.

Un réseau Oméga inversé à $2^K$ entrées et L étages (L≤K) est constitué par une matrice de $2^{K-1}$ lignes et L colonnes d'éléments binaires de commutation 502, à deux entrées et deux sorties, interconnectés selon la loi suivante (en supposant les entrées et sorties de chaque colonne numérotées de i=0 à i=$2^K$-1 du bas vers le haut de la colonne) :

- les $2^K$ entrées de la colonne 0 constituent les $2^K$ entrées ordonnées du réseau ;
- la sortie i de la colonne j-1 est reliée à l'entrée Rrot(i) de la colonne j, pour 0≤i≤$2^K$-1 et 1≤j≤L-1 ;
- la sortie i de la colonne L-1 constitue la sortie Rrot(i) du réseau, pour 0≤1≤$2^K$-1 ;

i étant compris entre 0 et $2^K$-1 est représenté par K bits en base 2, et la notation Rrot(i) utilisée ci-dessus désigne le nombre compris entre 0 et $2^K$-1 dont la représentation binaire correspond aux K bits représentant i, soumis à une permutation circulaire d'une position vers la droite. Par exemple avec K=4 et i=12=[1100]$_2$, on a Rrot(i)=[0110]$_2$=6. Chaque étage du réseau Oméga inversé est constitué par une colonne de $2^{K-1}$ éléments binaires de commutation 502 et par le maillage d'interconnexion situé en aval vers la colonne suivante.

L'élément binaire de commutation 502 est par exemple conforme au schéma de la figure 17. Les entrées supérieure IN0 et inférieure IN1 sont chacune reliées à une entrée d'une bascule D respective 503, 509 cadencée à l'horloge bit pour introduire un retard d'un temps de bit. La sortie de la bascule 503 est reliée à une entrée de deux portes ET 504, 506. La sortie de la bascule 509 est reliée à une entrée de deux portes ET 508, 510. Une porte OU 512 a deux entrées respectivement reliées aux sorties des portes ET 504 et 508 et une sortie constituant la sortie supérieure SS0 de l'élément 502. Une porte OU 514 a deux entrées respectivement reliées aux sorties des portes ET 506 et 510, et une sortie constituant la sortie inférieure SS1 de l'élément 502. L'élément 502 comporte en outre une bascule D 516 cadencée par un signal Hg, dont l'entrée D est reliée à l'entrée supérieure IN0 de l'élément 502. Les secondes entrées des portes ET 504 et 510 sont chacune reliées à la sortie Q de la bascule 516 de même que les secondes entrées des portes ET 506 et 508, qui sont inverseuses.

Le réseau Oméga inversé 500 de la figure 16 est suivi par K-L=1 étage de concentration 518 ayant un rapport de concentration de 2/1. L'étage de concentration 518 se compose de $2^L$ portes OU 520 agencées en colonne. Chaque porte OU 520 a deux entrées respectivement reliées à deux sorties consécutives du réseau Oméga inversé. Pour généraliser le concentrateur au cas où K-L>1, on prévoit K-L étages de concentration successifs en aval d'un réseau Oméga inversé à K étages, le j'-ième étage de concentration (1≤j'≤K-L) comportant $2^{K-j'}$ portes OU agencées en colonne et ayant deux entrées respectivement reliées à deux sorties consécutives de l'étage précédent.

Chaque capsule parvenant à une entrée du réseau Oméga inversé 500 comporte un en-tête de L bits au moins. Cet en-tête, qui est distinct du champ de routage précédemment décrit, est placé au début du format de capsule. Le (j+1)-ième bit b(j) de l'en-tête (0≤j≤L-1) est destiné à commander la commutation dans les éléments binaires de commutation de la colonne j du réseau Oméga inversé, de façon à acheminer la capsule vers la sortie supérieure SS0 lorsque b(j)=1 et vers la sortie inférieure SS1 lorsque b(j)=0. Cette commutation est obtenue en envoyant aux éléments 502 de la colonne j un signal de cadencement Hg réglé pour permettre de mémoriser le bit b(j) dans la bascule 516 pendant la durée de passage d'une capsule. Des bascules D 522 cadencées à l'horloge bit transmettent le signal Hg aux éléments binaires 502 des différentes étages. A priori, il peut se produire un conflit dans un élément binaire de commutation 502 si deux capsules parviennent simultanément sur ses deux entrées IN0 et IN1 avec des bits d'acheminement b(j) identiques.

Une logique de routage 524, est prévue en amont du réseau 500 pour générer les bits d'acheminement b(j) pour les différentes capsules de manière à éviter que de tels conflits apparaissent.

Les réseaux Oméga inversés ont la propriété d'être auto-acheminants, c'est-à-dire que les L bits d'acheminement b(L-1),...,b(0) considérés dans l'ordre inverse des colonnes sont la représentation binaire de l'adresse de sortie, c'est-à-dire du numéro de la sortie du concentrateur vers laquelle la capsule sera acheminée.

Un algorithme d'acheminement éliminant les conflits a été exposé dans le document FR-A-2 678 794. Cet algorithme consiste à attribuer aux capsules libres ou vides une adresse de sortie résultant de la décrémentation d'une première variable de comptage à l'arrivée de chaque capsule libre, et à attribuer aux capsules occupées une adresse de sortie résultant de l'incrémentation d'une seconde variable de comptage à l'arrivée de chaque capsule occupée. Ceci assure un acheminement des capsules libres dans le sens circulaire descendant des sorties, et un acheminement des capsules occupées dans le sens circulaire montant des sorties, sans risque de conflit dans le réseau Oméga inversé. Lorsque L<K, il est possible que plus que $2^L$ cellules parviennent simultanément à l'entrée, ce qui ne provoque pas de conflit dans les L étages du réseau Oméga inversé mais peut provoquer des collisions dans les portes OU des étages de concentration. Pour éviter de telles collisions, l'algorithme prévoit de mettre à zéro les éventuelles capsules en excès de $2^L$. Une telle mise à zéro occasionne la perte de la capsule; mais la probabilité d'une telle perte est très faible pour des dimensionnements réalistes des concentrateurs, comme expliqué précédemment.

Cet algorithme d'acheminement est mis en oeuvre par une unité 526 de calcul de routage de la logique de routage 524. Les en-têtes sont insérés au début de chaque capsule par des éléments 528 d'insertion d'en-têtes de routage (IER) prévus à chaque entrée du concentrateur. Une réalisation matérielle optimale de la logique de routage 524 est décrite dans la demande de brevet français 2 721 416 à laquelle on pourra se reporter.

Le concentrateur de la figure 16 assure en outre une fonction d'égalisation du trafic sur ses sorties. On observera que cette fonction n'est pas utile dans les concentrateurs élémentaires des CCSG.

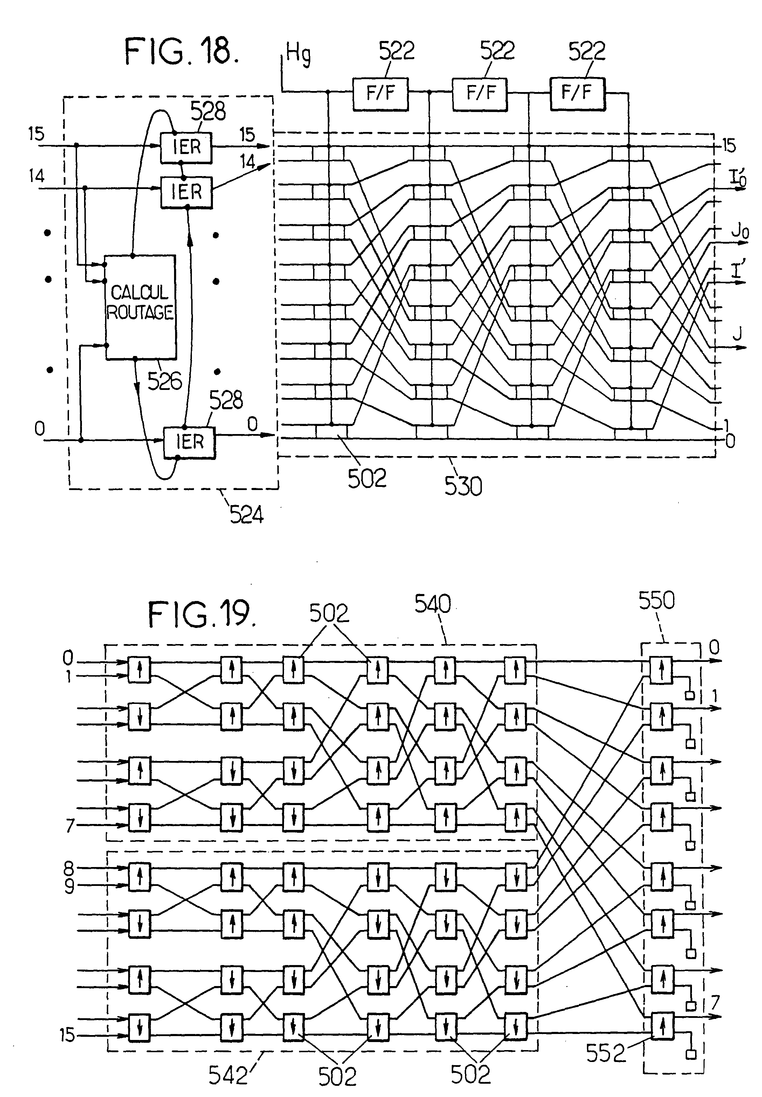

Lorsque K=L, c'est-à-dire en l'absence d'étages de concentration en aval du réseau Oméga inversé à K étages, celui-ci n'agit pas en concentrateur, mais simplement en égaliseur de trafic. On peut donc utiliser la même conception pour réaliser les égaliseurs de trafic placés en amont des CCSG. La figure 18 montre ainsi un égaliseur de trafic pour lequel K=L=4 et qui égalise donc le trafic de q=16 lignes. Les références numériques utilisées sont les mêmes que sur la figure 16 pour des éléments correspondants. La différence est que l'étage de portes OU 518 est remplacé par le K-ième étage du réseau Oméga inversé 530.

On note que l'algorithme de routage exposé ci-dessus accepte une variable libre qui est l'adresse de sortie initiale à partir de laquelle les adresses de sortie des capsules occupées sont attribuées selon le sens circulaire montant et celles des capsules libres sont attribuées dans le sens inverse. A chaque temps de capsule on change l'adresse initiale de telle façon que les capsules soient distribuées en une succession circulaire sur toutes les sorties. Par le fait que le nombre de capsules présentes chaque fois est aléatoire, la charge de chaque connexion ATM est distribuée statistiquement de façon uniforme.

Si, avec un période assez longue comparée à un temps de capsule, on réimpose une nouvelle adresse initiale, cette distribution régulière n'est pas perturbée. Cela permet d'envoyer des capsules de test selon des chemins déterministes à travers le réseau constitué par les égaliseurs de trafic et les CCSG, à fin de localisation des défauts du réseau. Supposons que la capsule de test doive entrer en position I pour sortir à la position I' (figure 18). Après que la première boucle de calcul, à partir d'une adresse initiale quelconque $J_0$, a donné l'adresse de sortie $I'_0$ correspondant à I, on réexécute la boucle de calcul de routage avec la valeur initiale $J=J_0+I'-I'_0$, de façon à obtenir l'adresse de sortie I' voulue pour l'entrée I, puisque $J-I'=J_0-I'_0$.

La figure 19 montre une autre constitution possible d'un concentrateur utilisable dans les CCSG ou dans les matrices de commutation par lignes. Le concentrateur représenté a $2^K$=16 entrées et $2^L$=8 sorties comme dans le cas de la figure 16. Il comprend deux réseaux de tri 540, 542 qui opèrent chacun un tri sur $2^{K-1}$=8 lignes sur la base des bits Q d'occupation des capsules. Le bit Q est alors de préférence placé en première position dans le format de capsule. Le réseau de tri 540 a ses entrées reliées aux entrées 0 à $2^{K-1}$-1=7 du concentrateur, et il trie les capsules suivant une ordre décroissant des bits Q, c'est-à-dire que les capsules occupées (Q=1) sont délivrées aux sorties supérieures du réseau 540 sur la figure 19 tandis que les cellules libres (Q=0) sont délivrées aux sorties inférieures. Le réseau de tri 542 a ses entrées reliées aux entrées $2^{K-1}$=8 à $2^K$-1=15 du concentrateur, et il trie les capsules suivant un ordre croissant des bits Q. En considérant du haut vers le bas de la figure 19 les sorties des deux réseaux de tri 540, 542, les bits Q constituent donc deux suites monotones qui, dans l'exemple représenté sont respectivement décroissante et croissante.

Dans le cas représenté sur la figure 19, les réseaux de tri 540, 542 sont des réseaux de Batcher de type "bitonic" (voir l'article "Sorting Networks and Their Applications", de K.E. Batcher, AFIPS Proc. 1968, Spring Joint Computer Conf., Vol 32; pages 307-314). Ils sont constitués chacun par K(K-1)/2=6 étages de $2^{K-2}$=4 éléments binaires de comparaison 502. Les éléments binaires 502 représentés sur la figure 19 avec une flèche pointant vers le haut sont conformes à celui de la figure 17. Les éléments de comparaison 502 représentés sur la figure 19 avec une flèche pointant vers le bas sont identiques sauf que c'est la sortie de la porte OU 514 qui constitue la sortie supérieure SS0 tandis que la sortie de la porte OU 512 constitue la sortie inférieure SS1. Le signal de cadencement Hg envoyé à la bascule 516 est ici réglé pour mémoriser dans cette bascule la valeur du bit Q indiquant si la capsule arrivant sur l'entrée connectée à la bascule 516 est libre (Q=0) ou occupée (Q=1) pendant la durée de passage de la capsule. Ainsi, la sortie SS0 de chaque élément 502 reçoit toujours une capsule dont le bit d'occupation Q a une valeur égale ou supérieure à celle du bit d'occupation de la capsule envoyée vers la sortie SS1.

En référence à la figure 19, les réseaux de tri 540, 542 sont suivis par K-L=1 étage de concentration 550 ayant un rapport de concentration de 2/1. L'étage de concentration 550 se compose de $2^L$ éléments de comparaison 552 essentiellement identiques aux éléments 502 représentés avec une flèche pointant vers le haut. Les capsules sortant de ces éléments 552 sur les sorties inférieures SS1 sont éliminées (d'après la figure 17, on voit donc que le multiplexeur constitué par les portes 506, 510 et 514 peut être supprimé dans ces éléments 552). Ainsi, la sortie unique SS0 de l'élément 552 reçoit une capsule occupée (Q=1) dès lors qu'il parvient au moins une capsule occupée sur ses deux entrées. Si deux capsules non occupées parviennent simultanément sur ses deux entrées, l'élément 552 achemine vers sa sortie SS0 celle parvenant sur l'entrée IN1. Pour généraliser le concentrateur au cas où K-L > 1, on prévoit K-L étages de concentration successifs en aval des réseaux de tri 540,542. Le j'-ième étage de concentration ($1 \leq j' \leq K-L$) comporte alors $2^{K-j'}$ éléments de comparaison 552, l'élément i ($0 \leq i < 2^{K-j'}$) du j'-ième étage de concentration ayant ses deux entrées respectivement reliées aux sorties i et $i+2^{K-j'}$ de l'étage précédent, et sa sortie constituant la sortie i de l'étage j'. Dans le cas du premier étage de concentration 550, l'élément i reçoit la (i+1)-ième plus grande valeur parmi les bits Q triés par le réseau 540 et la (i+1)-ième plus petite valeur parmi les bits Q triés par le réseau 542. Les propriétés des séquences "bitonic", mises en évidence par Batcher, assurent alors que le j'-ième étage de concentration délivre toujours les $2^{K-j'}$ plus grandes valeurs des bits Q fournis à l'entrée. On réalise donc bien une concentration de $2^K$ entrées vers $2^L$ sorties, avec élimination des éventuelles capsules en excès de $2^L$.

Pour réaliser un facteur de concentration égal à $2^{K-L}$ à partir de $2^K$ entrées, un concentrateur selon la figure 19 utilise K(K-1).$2^{K-2}$ éléments 502 et $2^K-2^L$ éléments 552, au lieu de L.$2^{K-1}$ éléments 502 et $2^K-2^L$ portes OU 520 pour un concentrateur selon la figure 16. Mais le concentrateur de la figure 19 permet de ne pas avoir à procéder à un calcul de routage.

Dans les deux cas, la réalisation d'un concentrateur allant jusqu'à 128x64 dans un circuit intégré spécifique ne présente pas de difficulté particulière dans l'état actuel de l'art. En utilisant des composants non spécifiques, on peut réaliser un tel dispositif en une carte électronique.

**Revendications**

1. Commutateur ATM , comprenant des matrices (36) de commutation par lignes ayant chacune m entrées et n sorties, m et n étant deux entiers tels que m≥n, et un réseau synchrone d'interconnexion reliant des lignes entrantes du commutateur ATM aux entrées des matrices de commutation par lignes, les sorties des matrices de commutation par lignes étant reliées à des lignes sortantes respectives du commutateur ATM, **caractérisé en ce que** le réseau synchrone d'interconnexion comprend k étages successifs de commutateurs synchrones élémentaires par groupes (48;48a;48b) ayant chacun au moins un et au plus p groupes de m entrées et au moins un et au plus p groupes de m sorties, k et p étant des entiers avec p≥2, des groupes de m lignes reliant chacun un groupe de m sorties d'un commutateur synchrone élémentaire par groupes à un groupe de m entrées d'un commutateur synchrone élémentaire par groupes de l'étage suivant, et des groupes de m lignes reliant chacun un groupe de m sorties d'un commutateur synchrone élémentaire par groupes du dernier étage aux m entrées d'une matrice de commutation par lignes, et **en ce que** chaque commutateur synchrone élémentaire par groupes (48;48a;48b) comprend au moins un et au plus p concentrateurs élémentaires (50) à pm entrées et m sorties, les m sorties de chaque concentrateur élémentaire constituant un groupe de m sorties dudit commutateur synchrone élémentaire par groupes, et chaque entrée dudit commutateur synchrone élémentaire par groupes étant reliée à une entrée respective de chacun de ses concentrateurs élémentaires par l'intermédiaire d'un filtre (52) d'élimination de cellules ATM non destinées à une sortie dudit concentrateur élémentaire.

2. Commutateur ATM selon la revendication 1, **caractérisé en ce que** le réseau synchrone d'interconnexion comprend c' coeurs de commutation synchrone par groupes (32;132;232) constitués par des commutateurs synchrones élémentaires par groupes (48;48a;48b) connectés entre eux par des groupes de m lignes , chaque coeur de commutation synchrone par groupes ayant N' groupes de m lignes de sortie et au moins N'm lignes d'entrée, c' et N' étant des entiers tels que c'≤m/n, N'≤$p^k$, et N'c'n est le nombre de lignes entrantes et de lignes sortantes du commutateur ATM, et **en ce que** les lignes d'entrée de chaque coeur de commutation synchrone par groupes reçoivent de façon synchrone les cellules ATM parvenant sur les N'c'n lignes entrantes du commutateur ATM.

3. Commutateur ATM selon la revendication 2, **caractérisé en ce que** lorsque N'=$p^k$, les commutateurs synchrones élémentaires par groupes de chaque coeur de commutation synchrone par groupes sont interconnectés suivant un réseau Delta d'ordre p à k étages dont les mailles sont les groupes de m lignes.

4. Commutateur ATM selon l'une quelconque des revendications 1 à 3, **caractérisé en ce que** chaque commutateur synchrone élémentaire par groupes comprend un composant passif de diffusion (90;94), au moins un composant (92;96) de réception de groupes de m lignes et, pour chaque concentrateur élémentaire dudit commutateur synchrone élémentaire par groupes, un composant actif connecté au composant passif de diffusion et regroupant ledit concentrateur (50) et les filtres (52) associés à ses pm entrées.

5. Commutateur ATM selon la revendication 4 **caractérisé en ce qu'**il comprend des blocs de sécurité dupliqués, chaque bloc de sécurité comprenant un composant de réception (96) d'un commutateur synchrone élémentaire par groupes, les groupes de m lignes (98) reçus par ce composant de réception et les composants actifs des commutateurs synchrones élémentaires par groupes de l'étage précédent, dont les concentrateurs élémentaires ont leurs sorties reliées auxdits groupes de m lignes.

6. Commutateur ATM selon la revendication 4 ou 5, **caractérisé en ce que** le composant de réception et les composants actifs d'un commutateur synchrone élémentaire par groupes sont constitués par des cartes électroniques respectives branchées sur un panneau arrière constituant ledit composant passif de diffusion.

7. Commutateur ATM selon l'une quelconque des revendications 1 à 6, **caractérisé en ce qu'**il comprend des moyens (74) de traduction initiale recevant les cellules ATM parvenant sur chaque ligne entrante, pour encapsuler chaque cellule dans un format de capsule comportant au moins un champ de routage placé avant la cellule pour l'acheminement dans le réseau synchrone d'interconnexion.

8. Commutateur ATM selon la revendication 7, **caractérisé en ce qu'**il comprend au moins un étage de traduction intermédiaire (70) placé immédiatement en aval d'un étage de commutateurs synchrones élémentaires par groupes, pour régénérer le contenu du champ de routage des capsules.

9. Commutateur ATM selon la revendication 8, **caractérisé en ce que** l'étage de traduction intermédiaire comprend des éléments (70) de traduction intermédiaire respectivement associés à des modules intermédiaires, un module intermédiaire étant constitué par les matrices de commutation par lignes et/ou les commutateurs synchrones élémentaires par groupes placés en aval de l'étage de traduction intermédiaire et connectés à un même élément (70) de traduction intermédiaire, **en ce que** le champ de routage généré par les moyens (74) de traduction initiale comporte un bit propre à chaque module intermédiaire indiquant si la capsule est à transmettre audit module intermédiaire, et **en ce que** chaque élément (70) de traduction intermédiaire regénère le champ de routage de manière à assurer l'acheminement dans le module intermédiaire associé.

10. Commutateur ATM selon l'une quelconque des revendications 7 à 9, **caractérisé en ce que**, pour une cellule ATM à diffuser vers plusieurs lignes sortantes, le format de capsule comporte un champ (A_Id) d'identification de l'arbre de diffusion.

11. Commutateur ATM selon l'une quelconque des revendications 7 à 10, **caractérisé en ce que** pour une cellule ATM transmise en mode de connexion point à point, le format de capsule comporte un champ (LS_Id) d'identification de la ligne sortante destinataire et un champ (C_Id) d'identification de la connexion point à point établie vers cette ligne sortante.

12. Commutateur ATM selon l'une quelconque des revendications 1 à 11, **caractérisé par** des moyens (34;134;234) d'égalisation du trafic sur des entrées du réseau synchrone d'interconnexion.

13. Commutateur ATM selon la revendication 12, **caractérisé en ce que** les moyens d'égalisation (34;134) sont agencés pour égaliser les trafics reçus par les différents commutateurs synchrones élémentaires par groupes du premier étage du réseau synchrone d'interconnexion.

**14.** Commutateur ATM selon la revendication 12, **caractérisé en ce que** les commutateurs synchrones élémentaires par groupes du premier étage du réseau synchrone d'interconnexion sont répartis en plusieurs ensembles, et **en ce que** les moyens d'égalisation (234) sont agencés pour égaliser les trafics reçus par les différents commutateurs synchrones élémentaires par groupes de chaque ensemble.

**15.** Commutateur ATM selon l'une quelconque des revendications 12 à 14, **caractérisé en ce que** les moyens d'égalisation (34;134;234) comprennent des égaliseurs de trafic ayant chacun $2^K$ entrées reliées à $2^K$ lignes entrantes du commutateur ATM, et $2^K$ sorties reliées au premier étage du réseau synchrone d'interconnexion, K étant un entier, **en ce que** chaque égaliseur de trafic comprend un réseau Oméga inversé à K étages (530) et une logique de routage (524) pour détecter les cellules ATM libres et occupées parvenant simultanément sur les $2^K$ entrées de l'égaliseur, pour acheminer les cellules libres dans le réseau Oméga inversé vers des sorties sélectionnées selon un sens circulaire, et pour acheminer les cellules occupées dans le réseau Oméga inversé vers des sorties sélectionnées selon le sens circulaire opposé.

**16.** Commutateur ATM selon l'une quelconque des revendications 1 à 15, **caractérisé en ce que** chaque matrice de commutation par lignes (36) comprend, pour chacune de ses n sorties, un concentrateur terminal (38) à m entrées et m' sorties, m' files d'attente (42) reliées chacune à une sortie respective dudit concentrateur terminal, et des moyens de lecture (44) pour transférer successivement le contenu des m' files d'attente vers ladite sortie de la matrice, m' étant un entier inférieur à m, chaque entrée de chaque concentrateur terminal (38) étant reliée à une entrée respective de ladite matrice de commutation par lignes (36) par l'intermédiaire d'un filtre (46) d'élimination des cellules ATM non destinées à la sortie correspondante de la matrice.

**17.** Commutateur ATM selon la revendication 1 ou 16, **caractérisé en ce qu'**un concentrateur à $2^K$ entrées et $2^L$ sorties inclus dans un commutateur synchrone élémentaire par groupes (48;48a;48b) ou dans une matrice de commutation par lignes (36), K et L étant deux entiers tels que K>L, comprend un réseau Oméga inversé (500) à $2^K$ entrées et L étages suivis par K-L étages de concentration successifs (518), le j'-ième étage de concentration comprenant $2^{K-j'}$ portes OU (520) ayant chacune deux entrées respectivement reliées à deux sorties consécutives de l'étage précédent, pour $1 \leq j' \leq K-L$, et une logique de routage (524) pour détecter les cellules ATM libres et occupées parvenant simultanément sur les $2^K$ entrées du concentrateur, pour acheminer les cellules libres dans le réseau Oméga inversé et les étages de concentration vers des sorties sélectionnées selon un sens circulaire, et pour acheminer les cellules occupées dans le réseau Oméga inversé et les étages de concentration vers des sorties sélectionnées selon le sens circulaire opposé.

**18.** Commutateur ATM selon la revendication 1 ou 16, **caractérisé en ce qu'**un concentrateur à $2^K$ entrées et $2^L$ sorties inclus dans un commutateur synchrone élémentaire par groupes (48;48a;48b) ou dans une matrice de commutation par lignes (36), K et L étant deux entiers tels que K>L, comprend deux réseaux de tri (540, 542) à $2^{K-1}$ entrées et $2^{K-1}$ sorties opérant chacun un tri des cellules ATM parvenant simultanément à ses $2^{K-1}$ entrées sur la base de bits (Q) d'occupation desdites cellules, de façon que les bits d'occupation (Q) des cellules forment deux suites monotones respectives en sortie des réseaux de tri, **en ce que** les réseaux de tri sont suivis par K-L étages de concentration successifs (550), le premier étage de concentration comportant $2^{K-1}$ éléments de comparaison (552), l'élément de comparaison $i (0 \leq i < 2^{K-1})$ du premier étage de concentration ayant une première entrée recevant la cellule ATM dont le bit d'occupation a la (i+1)-ième plus grande valeur d'une des suites monotones et une seconde entrée recevant la cellule ATM dont le bit d'occupation a la (i+1)-ième plus petite valeur de l'autre suite monotone, **en ce que**, si K-L>1, le j'-ième étage de concentration $(1 < j' \leq K-L)$ comporte $2^{K-j'}$ éléments de comparaison (552), l'élément de comparaison $i (0 \leq i < 2^{K-j'})$ du j'-ième étage de concentration ayant deux entrées respectivement reliées aux sorties des éléments de comparaison $i$ et $i+2^{K-j'}$ du (j'-1)-ième étage de concentration, et **en ce que** chaque élément de comparaison (552) d'un étage de concentration (550) achemine vers sa sortie une cellule ATM occupée s'il reçoit au moins une cellule ATM occupée sur une de ses deux entrées, et une cellule ATM non occupée s'il ne reçoit aucune cellule ATM occupée sur ses deux entrées.

**19.** Coeur de commutation synchrone par groupes (32;132,232) **caractérisé en ce qu'**il comprend N' groupes de m lignes de sortie, au moins N'm lignes d'entrée, et k étages de commutateurs synchrones élémentaires par groupes (48;48a;48b), N',m et k étant des entiers avec $N' \geq 2$ et $m \geq 2$, **en ce que** chaque commutateur synchrone élémentaire par groupes comporte au moins un et au plus p concentrateurs élémentaires (50) à pm entrées et m sorties, p étant un entier au moins égal à 2 tel que $N' \leq p^k$, les m sorties de chaque concentrateur élémentaire constituant un groupe de m sorties du commutateur synchrone élémentaire par groupes et chaque entrée du commutateur synchrone élémentaire par groupes étant reliée à une entrée respective de chacun de ses concentrateurs élémentaires par l'intermédiaire d'un filtre (52) d'élimination de cellules ATM non destinées à une sortie dudit concentrateur élémentaire, et **en ce que** les commutateurs synchrones élémentaires par groupes des étages successifs sont interconnectés par des groupes de m lignes reliant chacun un groupe de m sorties d'un commutateur synchrone élémentaire par groupes à m entrées d'un commutateur synchrone élémentaire par groupe de l'étage suivant, les lignes d'entrées étant reliées à des entrées des commutateurs synchrones élémentaires par groupes du premier étage, et les groupes de m sorties des commutateurs synchrones élémentaires par groupes du dernier étage étant respectivement reliés aux N' groupes de m lignes de sortie.

20. Coeur de commutation synchrone par groupes selon la revendication 19, **caractérisé en ce que**, lorsque $N'=p^k$, les commutateurs synchrones élémentaires par groupes sont interconnectés suivant un réseau Delta d'ordre p à k étages dont les mailles sont des groupes de m lignes.

21. Coeur de commutation synchrone par groupes selon la revendication 19 ou 20, **caractérisé en ce que** chaque commutateur synchrone élémentaire par groupes comprend un composant passif de diffusion (90;94), au moins un composant (92;96) de réception de groupes de m lignes, et, pour chaque concentrateur élémentaire dudit commutateur synchrone élémentaire par groupes, un composant actif connecté au composant passif de diffusion et regroupant ledit concentrateur (50) et les filtres (52) associés à ses pm entrées.

22. Coeur de commutation synchrone par groupes selon la revendication 21, **caractérisé en ce qu'**il comprend des blocs de sécurité dupliqués, chaque bloc de sécurité comprenant un composant de réception (96) d'un commutateur synchrone élémentaire par groupes, les groupes de m lignes (98) reçus par ce composant de réception et les composants actifs des commutateurs synchrones élémentaires par groupes de l'étage précédent, dont les concentrateurs élémentaires ont leurs sorties respectivement reliées auxdits groupes de m lignes.

23. Coeur de commutation synchrone par groupes selon la revendication 21 ou 22, **caractérisé en ce que** le composant de réception et les composants actifs d'un commutateur synchrone élémentaire par groupes sont constitués par des cartes électroniques respectives branchées sur un panneau arrière constituant ledit composant passif de diffusion.

24. Coeur de commutation synchrone par groupes selon l'une quelconque des revendications 19 à 23, **caractérisé en ce qu'**un concentrateur élémentaire (50) à $2^K$ entrées et $2^L$ sorties inclus dans un commutateur synchrone élémentaire par groupes (48;48a;48b), K et L étant deux entiers tels que $p=2^{K-L}$ et $m=2^L$, comprend un réseau Oméga inversé (500) à $2^K$ entrées et L étages suivis par K-L étages de concentration successifs (518), le j'-ième étage de concentration comprenant $2^{K-j'}$ portes OU (520) ayant chacune deux entrées respectivement reliées à deux sorties consécutives de l'étage précédent, pour $1 \leq j' \leq K-L$, et une logique de routage (524) pour détecter les cellules ATM libres et occupées parvenant simultanément sur les $2^K$ entrées du concentrateur élémentaire, pour acheminer les cellules libres dans le réseau Oméga inversé et les étages de concentration vers des sorties sélectionnées selon un sens circulaire, et pour acheminer les cellules occupées dans le réseau Oméga inversé et les étages de concentration vers des sorties sélectionnées selon le sens circulaire opposé.

25. Coeur de commutation synchrone par groupes selon l'une quelconque des revendications 19 à 23, **caractérisé en ce qu'**un concentrateur à $2^K$ entrées et $2^L$ sorties inclus dans un commutateur synchrone élémentaire par groupes (48;48a; 48b), K et L étant deux entiers tels que $p=2^{K-L}$ et $m=2^L$, comprend deux réseaux de tri (540, 542) à $2^{K-1}$ entrées et $2^{K-1}$ sorties opérant chacun un tri des cellules ATM parvenant simultanément à ses $2^{K-1}$ entrées sur la base de bits (Q) d'occupation desdites cellules, de façon que les bits d'occupation (Q) des cellules forment deux suites monotones respectives en sortie des réseaux de tri, **en ce que** les réseaux de tri sont suivis par K-L étages de concentration successifs (550), le premier étage de concentration comportant $2^{K-1}$ éléments de comparaison (552), l'élément de comparaison $i(0 \leq i < 2^{K-1})$ du premier étage de concentration ayant une première entrée recevant la cellule ATM dont le bit d'occupation a la (i+l)-ième plus grande valeur d'une des suites monotones et une seconde entrée recevant la cellule ATM dont le bit d'occupation a la (i+1)-ième plus petite valeur de l'autre suite monotone, **en ce que**, si K-L>1, le j'-ième étage de concentration (1<j'≤K-L) comporte $2^{K-j'}$ éléments de comparaison (552), l'élément de comparaison i $(0 \leq i < 2^{K-j'})$ du j'-ième étage de concentration ayant deux entrées respectivement reliées aux sorties des éléments de comparaison i et $i+2^{K-j'}$ du (j'-1)-ième étage de concentration, et **en ce que** chaque élément de comparaison (552) d'un étage de concentration (550) achemine vers sa sortie une cellule ATM occupée s'il reçoit au moins une cellule ATM occupée sur une de ses deux entrées, et une cellule ATM non occupée s'il ne reçoit aucune cellule ATM occupée sur ses deux entrées.

**Patentansprüche**

1.  ATM-Vermittler, der Leitungsschaltmatrizen (36), die jeweils m Eingänge und n Ausgänge aufweist, wobei m und n zwei ganze Zahlen sind, die so beschaffen sind, daß m≥n ist, und ein synchrones Verbindungsnetz umfaßt, das die eingehenden Leitungen des ATM-Vermittlers mit den Eingängen der Leitungsschaltmatrizen verbindet, wobei die Ausgänge der Leitungsschaltmatrizen mit betreffenden ausgehenden Leitungen des ATM-Vermittlers verbunden sind, **dadurch gekennzeichnet, daß** das synchrone Verbindungsnetz k aufeinanderfolgende Stufen von elementaren synchronen Gruppenvermittlern (48; 48a; 48b) mit jeweils wenigstens einer und höchstens p Gruppen von m Eingängen und wenigstens einem und höchstens p Gruppen von m Ausgängen umfaßt, wobei k und p ganze Zahlen sind mit p≥2, wobei Gruppen von m Leitungen jeweils eine Gruppe von m Ausgängen eines elementaren synchronen Gruppenvermittlers mit einer Gruppe von m Eingängen eines elementaren synchronen Gruppenvermittlers der folgenden Stufe verbinden und Gruppen von m Leitungen jeweils eine Gruppe von m Ausgängen eines elementaren synchronen Gruppenvermittlers der letzten Stufe mit den m Eingängen einer Leitungsschaltmatrix verbinden, und daß jeder elementare synchrone Gruppenvermittler (48; 48a; 48b) wenigstens einen und höchstens p elementare Konzentratoren (50) mit pm Eingängen und m Ausgängen umfaßt, wobei die m Ausgänge jedes elementaren Konzentrators eine Gruppe von m Ausgängen des genannten elementaren synchronen Gruppenvermittlers bilden und jeder Eingang des genannten elementaren synchronen Gruppenvermittlers mit einem jeweiligen Eingang jedes seiner elementaren Konzentratoren über ein Filter (52) zum Entfernen von nicht für einen Ausgang des elementaren Konzentrators bestimmten ATM-Zellen verbunden ist.

2.  ATM-Vermittler nach Anspruch 1, **dadurch gekennzeichnet, daß** das synchrone Verbindungsnetz c' Synchronvermittlungsgruppenkerne (32; 132; 232) umfaßt, die durch elementare synchrone Gruppenvermittler (48; 48a; 48b) gebildet werden, die miteinander durch Gruppen von m Leitungen verbunden sind, wobei jeder Synchronvermittlungsgruppenkern N' Gruppen aus m Ausgangsleitungen und wenigstens N'm Eingangsleitungen hat, wobei c' und N' ganze Zahlen sind, die so beschaffen sind, daß c'≤m/n, N'≤$p^k$ und N'c'n die Anzahl der eingehenden und ausgehenden Leitungen des ATM-Vermittlers ist, und daß die Eingangsleitungen jedes Synchronvermittlungsgruppenkerns in synchroner Weise die ATM-Zellen empfangen, die auf den N'c'n eingehenden Leitungen des ATM-Vermittlers ankommen.

3.  ATM-Vermittler nach Anspruch 2, **dadurch gekennzeichnet, daß**, wenn N'=pk, die elementaren synchronen Gruppenvermittler jedes Synchronvermittlungsgruppenkerns miteinander entsprechend einem Delta-Netz der Ordnung p mit k Stufen verbunden sind, dessen Maschen die Gruppen von m Leitungen sind.

4.  ATM-Vermittler nach einem der Ansprüche 1 bis 3, **dadurch gekennzeichnet, daß** jeder elementare synchrone Gruppenvermittler eine Passivkomponente zur Aussendung (90; 94), wenigstens eine Empfangskomponente (92; 96) von Gruppen von m Leitungen und für jeden elementaren Konzentrator des elementaren synchronen Gruppenvermittlers eine Aktivkomponente umfaßt, die mit der Passivkomponente zur Aussendung verbunden ist und den Konzentrator (50) und die seinen pm Eingängen zugeordneten Filter (52) zusammenschließt.

5.  ATM-Vermittler nach Anspruch 4, **dadurch gekennzeichnet, daß** er vervielfältigte Sicherheitsblöcke umfaßt, wobei jeder Sicherheitsblock eine Empfangskomponente (96) eines elementaren synchronen Gruppenvermittlers, die durch diese Empfangskomponente empfangenen Gruppen von m Leitungen (98) und die Aktivkomponenten der elementaren synchronen Gruppenvermittler der vorhergehenden Stufe enthält, wobei die Ausgänge von deren elementaren Konzentratoren mit den Gruppen von m Leitungen verbunden sind.

6.  ATM-Vermittler nach Anspruch 4 oder 5, **dadurch gekennzeichnet, daß** die Empfangskomponente und die Aktivkomponenten eines elementaren synchronen Gruppenvermittlers durch betreffende elektronische Karten gebildet sind, die an einer Rückseite angeschlossen sind, welche die Passivkomponente zur Aussendung bildet.

7.  ATM-Vermittler nach einem der Ansprüche 1 bis 6, **dadurch gekennzeichnet, daß** er Mittel (74) zur Anfangsumsetzung umfaßt, welche die auf jeder eingehenden Leitung ankommenden ATM-Zellen empfängt, um jede Zelle in ein Kapselformat einzukapseln, das wenigstens ein Leitfeld enthält, das vor der Zelle zur Leitung im synchronen Verbindungsnetz angeordnet ist.

8.  ATM-Vermittler nach Anspruch 7, **dadurch gekennzeichnet, daß** er wenigstens eine Zwischenumsetzungsstufe (70) umfaßt, die unmittelbar im Anschluß an eine Stufe mit elementaren synchronen Gruppenvermittlern angeordnet ist, um den Inhalt des Leitfeldes der Kapseln zu regenerieren.

**9.** ATM-Vermittler nach Anspruch 8, **dadurch gekennzeichnet, daß** die Zwischenumsetzumgsstufe Elemente (70) zur Zwischenumsetzung umfaßt, von denen jedes jeweils einem Zwischenmodul zugeordnet ist, wobei ein Zwischenmodul durch die Leitungsschaltmatrizen und/oder die elementaren synchronen Gruppenvermittler gebildet wird, die im Anschluß an die Zwischenumsetzungsstufe angeordnet und mit einem gleichen Zwischenumsetzungselement (70) verbunden sind, daß das durch die Mittel (74) zur Anfangsumsetzung erzeugte Leitfeld ein jedem Zwischenmodul eigenes Bit enthält, das anzeigt, ob die Kapsel zum genannten Modul zu übertragen ist, und daß jedes Zwischenumsetzungselement (70) das Leitfeld regeneriert, um die Leitung im zugeordneten Zwischenmodul sicherzustellen.

**10.** ATM-Vermittler nach einem der Ansprüche 7 bis 9, **dadurch gekennzeichnet, daß** für eine zu mehreren ausgehenden Leitungen hin auszusendende ATM-Zelle das Kapselformat ein Identifizierungsfeld (A_Id) des Aussendungsbaumgraphen enthält.

**11.** ATM-Vermittler nach einem der Ansprüche 7 bis 10, **dadurch gekennzeichnet, daß** für eine im Punkt-zu-Punkt-Verbindungsmode übertragene ATM-Zelle das Kapselformat ein Identifizierungsfeld (LS_Id) der ausgehenden Adressatleitung und ein Identifizierungsfeld (C_Id) der Punkt-zu-Punkt-Verbindung enthält, die zu dieser ausgehenden Leitung hin eingerichtet ist.

**12.** ATM-Vermittler nach einem der Ansprüche 1 bis 11, **gekennzeichnet durch** Mittel (34; 134; 234) zum Ausgleich des Verkehrs auf den Eingängen des synchronen Verbindungsnetzes.

**13.** ATM-Vermittler nach Anspruch 12, **dadurch gekennzeichnet, daß** die Ausgleichsmittel (34; 134; 234) zum Ausgleichen des Verkehrs eingerichtet sind, der durch die verschiedenen elementaren synchronen Gruppenvermittler der ersten Stufe des synchronen Verbindungsnetzes empfangen wird.

**14.** ATM-Vermittler nach Anspruch 12, **dadurch gekennzeichnet, daß** die elementaren synchronen Gruppenvermittler der ersten Stufe des synchronen Verbindungsnetzes in mehrere Anordnungen aufgeteilt sind und daß die Ausgleichsmittel (234) eingerichtet sind, um die Verkehrsströme auszugleichen, die durch die verschiedenen elementaren synchronen Gruppenvermittler jeder Anordnung empfangen werden.

**15.** ATM-Vermittler nach einem der Ansprüche 12 bis 14, **dadurch gekennzeichnet, daß** die Ausgleichsmittel (34; 134; 234) Verkehrsausgleicher umfassen, die jeweils $2^K$ mit $2^K$ eingehenden Leitungen des ATM-Vermittlers verbundene Eingänge und $2^K$ mit der ersten Stufe des synchronen Verbindungsnetzes verbundene Ausgänge haben, wobei K eine ganze Zahl ist, und daß jeder Verkehrausgleicher ein invertiertes Omega-Netz mit K Stufen (530) und eine Leitlogik (524) zum Detektieren der freien und belegten ATM-Zellen umfaßt, die gleichzeitig auf den $2^K$ Eingängen des Ausgleichers ankommen, um die freien Zellen im invertierten Omega-Netz zu den entsprechend einer Kreisrichtung ausgewählten Ausgängen und um die belegten Zellen im invertierten Omega-Netz zu den entsprechend der entgegengesetzten Kreisrichtung ausgewählten Ausgängen zu leiten.

**16.** ATM-Vermittler nach einem der Ansprüche 1 bis 15, **dadurch gekennzeichnet, daß** jede Leitungsschaltmatrix (36) für jeden ihrer n Ausgänge einen Abschlußkonzentrator (38) mit m Eingängen und m' Ausgängen, m' jeweils mit einem betreffenden Ausgang des Abschlußkonzentrators verbundene Warteschlangen (42) und Lesemittel (44) zum Übertragen des Inhalts der m' Warteschlangen nacheinander zum genannten Ausgang der Matrix hin umfaßt, wobei m' eine ganze Zahl kleiner als m ist, wobei jeder Eingang jedes Abschlußkonzentrators (38) mit einem betreffenden Eingang der genannten Leitungsschaltmatrix (36) über ein Filter (46) zum Entfernen der nicht für den entsprechenden Ausgang der Matrix bestimmten ATM-Zellen verbunden ist.

**17.** ATM-Vermittler nach Anspruch 1 oder 16, **dadurch gekennzeichnet, daß** ein Konzentrator mit $2^K$ Eingängen und $2^L$ Ausgängen, der in einem elementaren synchronen Gruppenvermittler (48; 48a; 48b) oder in einer Leitungsschaltmatrix (36) enthalten ist, wobei K und L zwei ganze Zahlen sind, die so beschaffen sind, daß K>L ist, ein invertiertes Omega-Netz (500) mit $2^K$ Eingängen und L Stufen, denen K-L aufeinanderfolgende Konzentrationsstufen (518) folgen, wobei die j'-te Konzentrationsstufe $2^{K-j'}$ ODER-Glieder (520) mit jeweils zwei Eingängen enthält, die mit dem einen bzw. dem anderen von zwei aufeinanderfolgenden Ausgängen der vorhergehenden Stufe für $1 \leq j' \leq K-L$ verbunden sind, und eine Leitlogik (524) zum Detektieren der freien und belegten ATM-Zellen umfaßt, die gleichzeitig an den $2^K$ Eingängen des Konzentrators ankommen, um die freien Zellen im invertierten Omega-Netz und die Konzentrationsstufen zu den entsprechend einer Kreisrichtung ausgewählten Ausgängen hin zu leiten und um die belegten Zellen im invertierten Omega-Netz und die Konzentrationsstufen zu den entsprechend der entgegengesetzten Kreisrichtung ausgewählten Ausgängen hin zu leiten.

18. ATM-Vermittler nach Anspruch 1 oder 16, **dadurch gekennzeichnet, daß** ein Konzentrator mit $2^K$ Eingängen und $2^L$ Ausgängen, der in einem elementaren synchronen Gruppenvermittler (48; 48a; 48b) oder in einer Leitungsschaltmatrix (36) enthalten ist, wobei K und L zwei ganze Zahlen sind, die so beschaffen sind, daß K>L ist, zwei Sortiernetze (540; 542) mit $2^{K-1}$ Eingängen und $2^{K-1}$ Ausgängen umfaßt, die jeweils als Sortierer der ATM-Zellen arbeiten, die gleichzeitig an ihren $2^{K-1}$ Eingängen auf Grundlage von Belegtbits (Q) der genannten Zellen ankommen, so daß die Belegtbits (Q) der Zellen zwei jeweilige monotone Folgen am Ausgang der Sortiernetze bilden, daß auf die Sortiernetze K-L aufeinanderfolgende Konzentrationsstufen (550) folgen, wobei die erste Konzentrationsstufe $2^{K-1}$ Vergleichselemente (552) enthält, wobei das Vergleichselement i$(0 \leq i \leq 2^{K-1})$ der ersten Konzentrationsstufe einen ersten Eingang hat, der die ATM-Zelle empfängt, deren Belegtbit den (i+1)-größten Wert einer der monotonen Folgen hat, und einen zweiten Eingang hat, der die ATM-Zelle empfängt, deren Belegtbit den (i+1)-kleinsten Wert der anderen monotonen Folge hat, daß, wenn K-L>1, die j'-te Konzentrationsstufe $(1<j' \leq K-L)$ $2^{K-j'}$ Vergleichselemente (552) umfaßt, wobei das Vergleichselement i $(0 \leq i < 2^{K-j'})$ der j'-ten Konzentrationsstufe zwei Eingänge hat, die mit dem Ausgang des Vergleichselementes i bzw. i+$2^{K-j'}$ der (j'-1)-ten Konzentrationsstufe verbunden sind, und daß jedes Vergleichselement (552) einer Konzentrationsstufe (550) zu seinem Ausgang hin eine belegte ATM-Zelle leitet, wenn es wenigstens eine belegte ATM-Zelle an einem seiner beiden Eingänge empfängt, und eine nicht belegte ATM-Zelle, wenn es keine belegte ATM-Zelle an seinen beiden Eingängen empfängt.

19. Synchronvermittlungsgruppenkern (32; 132; 232), **dadurch gekennzeichnet, daß** er N' Gruppen aus m Ausgangsleitungen, wenigstens N'm Eingangsleitungen und k elementare synchrone Gruppenvermittlerstufen (48; 48a; 48b) umfaßt, wobei N', m und k ganze Zahlen mit N'≥2 und m≥2 sind, daß jeder elementare synchrone Gruppenvermittler wenigstens einen und höchstens p elementare Konzentratoren (50) mit pm Eingängen und m Ausgängen enthält, wobei p eine ganze Zahl von wenigstens gleich 2 ist, die so beschaffen ist, daß $N' \leq p^k$ ist, wobei die m Ausgänge jedes elementaren Konzentrators eine Gruppe von m Ausgängen des elementaren synchronen Gruppenvermittlers bilden und jeder Eingang des elementaren synchronen Gruppenvermittlers mit einem betreffenden Eingang jedes seiner elementaren Konzentratoren über ein Filter (52) zum Entfernen von ATM-Zellen verbunden ist, die nicht für einen Ausgang des genannten elementaren Konzentrators bestimmt sind, und daß die elementaren synchronen Gruppenvermittler der aufeinanderfolgenden Stufen durch Gruppen von m Leitungen zusammengeschaltet sind, die jeweils eine Gruppe aus m Ausgängen eines elementaren synchronen Gruppenvermittlers mit m Eingängen eines elementaren synchronen Gruppenvermittlers der folgenden Stufe verbinden, wobei die Eingangsleitungen mit Eingängen der elementaren synchronen Gruppenvermittler der ersten Stufe und die Gruppen von m Ausgängen der elementaren synchronen Gruppenvermittler der letzten Stufe jeweils mit den N' Gruppen von m Ausgangsleitungen verbunden sind.

20. Synchronvermittlungsgruppenkern nach Anspruch 19, **dadurch gekennzeichnet, daß**, wenn $N'=p^k$, die elementaren synchronen Gruppenvermittler entsprechend einem Delta-Netz der Ordnung p mit k Stufen zusammengeschaltet sind, dessen Maschen Gruppen von m Leitungen sind.

21. Synchronvermittlungsgruppenkern nach Anspruch 19 oder 20, **dadurch gekennzeichnet, daß** jeder elementare synchrone Gruppenvermittler eine Passivkomponente (90; 94) zum Aussenden, wenigstens eine Komponente (92; 96) zum Empfangen von Gruppen von m Leitungen und für jeden elementaren Konzentrator des genannten elementaren synchronen Gruppenvermittlers eine Aktivkomponente umfaßt, die mit der Passivkomponente zum Aussenden verbunden ist und den genannten Konzentrator (50) und die seinen pm Eingängen zugeordneten Filter (52) zusammenschließt.

22. Synchronvermittlungsgruppenkern nach Anspruch 21, **dadurch gekennzeichnet, daß** er vervielfältigte Sicherheitsblöcke, wobei jeder Sicherheitsblock eine Empfangskomponente (96) eines elementaren synchronen Gruppenvermittlers enthält, die durch diese Empfangskomponente empfangenen Gruppen von m Leitungen (98) und die Aktivkomponenten der elementaren synchronen Gruppenvermittler der vorhergehenden Stufe umfaßt, wobei die Ausgänge von deren elementaren Konzentratoren jeweils mit den genannten Gruppen von m Leitungen verbunden sind.

23. Synchronvermittlungsgruppenkern nach Anspruch 21 oder 22, **dadurch gekennzeichnet, daß** die Empfangskomponenten und die Aktivkomponenten eines elementaren synchronen Gruppenvermittlers durch jeweilige elektronische Karten gebildet sind, die auf einer Rückseite angeschlossen sind, welche die Passivkomponente zum Aussenden bildet.

24. Synchronvermittlungsgruppenkern nach einem der Ansprüche 19 bis 23, **dadurch gekennzeichnet, daß** ein elementarer Konzentrator (50) mit $2^K$ Eingängen und $2^L$ Ausgängen, der in einem elementaren synchronen Gruppenvermittler (48; 48a; 48b) enthalten ist, wobei K und L zwei ganze Zahlen sind, die so beschaffen sind, daß $p=2^{K-L}$ und $m=2^L$, ein invertiertes Omega-Netz (500) mit $2^K$ Eingängen und L Stufen, denen K-L aufeinanderfolgende Konzentrationsstufen (518) folgen, wobei die j'-te Konzentrationsstufe $2^{K-j'}$ ODER-Glieder (520) mit jeweils zwei Eingängen umfaßt, die mit dem einen bzw. dem anderen von zwei aufeinanderfolgenden Ausgängen der vorhergehenden Stufe verbunden sind, für $1{\leq}j'{\leq}K-L$, und eine Leitlogik (524) zum Detektieren der freien und belegten ATM-Zellen umfaßt, die gleichzeitig an den $2^K$ Eingängen des elementaren Konzentrators ankommen, um die freien Zellen im invertierten Omega-Netz und die Konzentrationsstufen zu den entsprechend einer Kreisrichtung ausgewählten Ausgängen und um die belegten Zellen im invertierten Omega-Netz und die Konzentrationsstufen zu den entsprechend der entgegengesetzten Kreisrichtung ausgewählten Ausgängen hin zu leiten.

25. Synchronvermittlungsgruppenkern nach einem der Ansprüche 19 bis 23, **dadurch gekennzeichnet, daß** ein Konzentrator mit $2^K$ Eingängen und $2^L$ Ausgängen, der in einem elementaren synchronen Gruppenvermittler (48; 48a; 48b) enthalten ist, wobei K und L zwei ganze Zahlen sind, die so beschaffen sind, daß $p=2^{K-L}$ und $m=2^L$, zwei Sortiernetze (540, 542) mit $2^{K-1}$ Eingängen und $2^{K-1}$ Ausgängen umfaßt, die jeweils als Sortierer der ATM-Zellen arbeiten, die gleichzeitig an ihren $2^{K-1}$ Eingängen auf Grundlage von Belegtbits (Q) der genannten Zellen ankommen, so daß die Belegtbits (Q) der Zellen zwei jeweilige monotone Folgen am Ausgang der Sortiernetze bilden, daß auf die Sortiernetze K-L aufeinanderfolgende Konzentrationsstufen (550) folgen, wobei die erste Konzentrationsstufe $2^{K-1}$ Vergleichselemente (552) enthält, wobei das Vergleichselement $i(0{\leq}i{\leq}2^{K-1})$ der ersten Konzentrationsstufe einen ersten Eingang hat, der die ATM-Zelle empfängt, deren Belegtbit den (i+1)-größten Wert einer der monotonen Folgen hat, und einen zweiten Eingang hat, der die ATM-Zelle empfängt, deren Belegtbit den (i+1)-kleinsten Wert der anderen monotonen Folge hat, daß, wenn K-L>1, die j'-te Konzentrationsstufe $(1{<}j'{\leq}K-L)$ $2^{K-j'}$ Vergleichselemente (552) umfaßt, wobei das Vergleichselement $i$ $(0{\leq}i{<}2^{K-j'})$ der j'-ten Konzentrationsstufe zwei Eingänge hat, die mit dem Ausgang des Vergleichselementes $i$ bzw. $i+2^{K-j'}$ der (j'-1)-ten Konzentrationsstufe verbunden sind, und daß jedes Vergleichselement (552) einer Konzentrationsstufe (550) zu seinem Ausgang hin eine belegte ATM-Zelle leitet, wenn es wenigstens eine belegte ATM-Zelle an einem seiner beiden Eingänge empfängt, und eine nicht belegte ATM-Zelle, wenn es keine belegte ATM-Zelle an seinen beiden Eingängen empfängt.

**Claims**

1. ATM switch, comprising linewise switching matrices (36) each having m inputs and n outputs, m and n being two integers such that m≥n, and a synchronous interconnection network linking incoming lines of the ATM switch to the inputs of the linewise switching matrices, the outputs of the linewise switching matrices being linked to respective outgoing lines of the ATM switch, **characterized in that** the synchronous interconnection network comprises k successive stages of groupwise elementary synchronous switches (48; 48a; 48b) each having at least one and at most p groups of m inputs and at least one and at most p groups of m outputs, k and p being integers with p≥2, groups of m lines each linking a group of m outputs of a groupwise elementary synchronous switch to a group of m inputs of a groupwise elementary synchronous switch of the following stage, and groups of m lines each linking a group of m outputs of a groupwise elementary synchronous switch of the last stage to the m inputs of a linewise switching matrix, and **in that** each groupwise elementary synchronous switch (48; 48a; 48b) comprises at least one and at most p elementary concentrators (50) with pm inputs and m outputs, the m outputs of each elementary concentrator constituting a group of m outputs of said groupwise elementary synchronous switch, and each input of said groupwise elementary synchronous switch being linked to a respective input of each one of the elementary concentrators thereof by way of a filter (52) for eliminating ATM cells not destined for an output of said elementary concentrator.

2. ATM switch according to Claim 1, **characterized in that** the synchronous interconnection network comprises c' groupwise synchronous switching cores (32; 132; 232) consisting of groupwise elementary synchronous switches (48; 48a; 48b) connected together by groups of m lines, each groupwise synchronous switching core having N' groups of m output lines and at least N'm input lines, c' and N' being integers such that c'≤m/n, $N'{\leq}p^k$, and N'c'n is the number of incoming lines and of outgoing lines of the ATM switch, and **in that** the input lines of each groupwise synchronous switching core receive synchronously the ATM cells arriving on the N'c'n incoming lines of the ATM switch.

3. ATM switch according to Claim 2, **characterized in that** when $N'{=}p^k$, the groupwise elementary synchronous switches of each groupwise synchronous switching core are interconnected as a k-stage Delta network of order p whose internal links consist of the groups of m lines.

4. ATM switch according to any one of Claims 1 to 3, **characterized in that** each groupwise elementary synchronous switch comprises a passive broadcasting component (90; 94), at least one component (92; 96) for receiving groups of m lines and, for each elementary concentrator of said groupwise elementary synchronous switch, an active component connected to the passive broadcasting component and including said concentrator (50) and the filters (52) associated with the pm inputs thereof.

5. ATM switch according to Claim 4, **characterized in that** it comprises duplicated security blocks, each security block comprising a reception component (96) of a groupwise elementary synchronous switch, the groups of m lines (98) received by said reception component and the active components of the groupwise elementary synchronous switches of the preceding stage, whose elementary concentrators have their outputs linked to said groups of m lines.

6. ATM switch according to Claim 4 or 5, **characterized in that** the reception component and the active components of a groupwise elementary synchronous switch consist of respective electronic boards connected to a backplane constituting said passive broadcasting component.

7. ATM switch according to any one of Claims 1 to 6, **characterized in that** it comprises means (74) of initial translation receiving the ATM cells arriving on each incoming line, in order to encapsulate each cell into a capsule format which includes at least one routing field placed ahead of the cell for routing through the synchronous interconnection network.

8. ATM switch according to Claim 7, **characterized in that** it comprises at least one stage of intermediate translation (70) placed immediately downstream of a stage of groupwise elementary synchronous switches, in order to regenerate the contents of the routing field of the capsules.

9. ATM switch according to Claim 8, **characterized in that** the stage of intermediate translation comprises elements (70) of intermediate translation which are respectively associated with intermediate modules, an intermediate module consisting of the linewise switching matrices and/or the groupwise elementary synchronous switches placed downstream of the stage of intermediate translation and connected to one and the same element (70) of intermediate translation, **in that** the routing field generated by the means (74) of initial translation includes a bit specific to each intermediate module indicating whether the capsule is to be transmitted to said intermediate module, and **in that** each element (70) of intermediate translation regenerates the routing field in such a way as to ensure routing through the associated intermediate module.

10. ATM switch according to any one of Claims 7 to 9, **characterized in that**, for an ATM cell to be broadcast to several outgoing lines, the capsule format includes a field (A_Id) identifying a broadcasting tree.

11. ATM switch according to any one of Claims 7 to 10, **characterized in that** for an ATM cell transmitted in point-to-point connection mode, the capsule format includes a field (LS_Id) identifying the destination outgoing line and a field (C_Id) identifying the point-to-point connection established to said outgoing line.

12. ATM switch according to any one of Claims 1 to 11, **characterized by** means (34; 134; 234) for equalizing the traffic on inputs of the synchronous interconnection network.

13. ATM switch according to Claim 12, **characterized in that** the equalizing means (34; 134) are designed to equalize the traffic received by the various groupwise elementary synchronous switches of the first stage of the synchronous interconnection network.

14. ATM switch according to Claim 12, **characterized in that** the groupwise elementary synchronous switches of the first stage of the synchronous interconnection network are split up into several sets, and **in that** the equalizing means (234) are designed to equalize the traffic received by the various groupwise elementary synchronous switches of each set.

15. ATM switch according to any one of Claims 12 to 14, **characterized in that** the equalizing means (34; 134; 234) comprise traffic equalizers each having $2^K$ inputs linked to $2^K$ incoming lines of the ATM switch, and $2^K$ outputs linked to the first stage of the synchronous interconnection network, K being an integer, **in that** each traffic equalizer comprises a K-stage reverse Omega network (530) and routing logic (524) for detecting idle and busy ATM cells simultaneously arriving on the $2^K$ inputs of the equalizer, in order to route the idle cells through the reverse Omega network to selected outputs in one circular direction, and in order to route the busy cells through the reverse Omega network to selected outputs in the opposite circular direction.

16. ATM switch according to any one of Claims 1 to 15, **characterized in that** each linewise switching matrix (36) comprises, for each one of its n outputs, a terminal concentrator (38) with m inputs and m' outputs, m' queues (42) each linked to a respective output of said terminal concentrator, and reading means (44) for transferring in succession the contents of the m' queues to said output of the matrix, m' being an integer less than m, each input of each terminal concentrator (38) being linked to a respective input of said linewise switching matrix (36) by way of a filter (46) for eliminating the ATM cells not destined for the corresponding output of the matrix.

17. ATM switch according to Claim 1 or 16, **characterized in that** a concentrator with $2^K$ inputs and $2^L$ outputs encompassed within a groupwise elementary synchronous switch (48; 48a; 48b) or within a linewise switching matrix (36), K and L being two integers such that K>L, comprises a reverse Omega network (500) with $2^K$ inputs and L stages followed by K-L successive concentration stages (518), the j'-th concentration stage comprising 2K-j' OR gates (520) each having two inputs respectively linked to two consecutive outputs of the preceding stage, for $1{\leq}j'{\leq}K-L$, and routing logic (524) for detecting idle and busy ATM cells simultaneously arriving on the $2^K$ inputs of the concentrator, in order to route the idle cells through the reverse Omega network and the concentration stages to selected outputs in one circular direction, and in order to route the busy cells through the reverse Omega network and the concentration stages to selected outputs in the opposite circular direction.

18. ATM switch according to Claim 1 or 16, **characterized in that** a concentrator with $2^K$ inputs and $2^L$ outputs encompassed within a groupwise elementary synchronous switch (48; 48a; 48b) or within a linewise switching matrix (36), K and L being two integers such that K>L, comprises two sorting networks (540, 542) with $2^{K-1}$ inputs and $2^{K-1}$ outputs each sorting ATM cells simultaneously arriving at its $2^{K-1}$ inputs on the basis of activity bits (Q) each indicating whether a respective one of said cells is idle or busy, in such a way that the activity bits (Q) of the cells form two respective monotonic sequences at the output of the sorting networks, **in that** the sorting networks are followed by K-L successive concentration stages (550), the first concentration stage including $2^{K-1}$ comparison elements (552), the comparison element i ($0{\leq}i<2^{K-1}$) of the first concentration stage having i first input receiving the ATM cell whose activity bit has the (i+1)-th largest value of one of the monotonic sequences and a second input receiving the ATM cell whose activity bit has the (i+1)-th smallest value of the other monotonic sequence, **in that**, if K-L>1, the j'-th concentration stage (1<j'≤K-L) includes $2^{K-j'}$ comparison elements (552), the comparison element i ($0{\leq}i<2^{K-j'}$) of the j'-th concentration stage having two inputs respectively linked to the outputs of the comparison elements i and $i+2^{K-j'}$ of the (j'-1)-th concentration stage, and **in that** each comparison element (552) of a concentration stage (550) routes to its output a busy ATM cell if it receives at least one busy ATM cell on one of its two inputs, and an idle ATM cell if it receives no busy ATM cell on its two inputs.

19. Groupwise synchronous switching core (32; 132; 232) **characterized in that** it comprises N' groups of m output lines, at least N'm input lines, and k stages of groupwise elementary synchronous switches (48; 48a; 48b), N', m and k being integers with N'≥2 and m≥2, **in that** each groupwise elementary synchronous switch includes at least one and at most p elementary concentrators (50) with pm inputs and m outputs, p being an integer at least equal to 2 such that N'≤pk, the m outputs of each elementary concentrator constituting a group of m outputs of the groupwise elementary synchronous switch, and each input of the groupwise elementary synchronous switch being linked to respective input of each of the elementary concentrators thereof by way of a filter (52) for eliminating ATM cells not destined for an output of said elementary concentrator, and **in that** the groupwise elementary synchronous switches of the successive stages are interconnected by groups of m lines each linking a group of m outputs of a groupwise elementary synchronous switch to m inputs of a groupwise elementary synchronous switch of the following stage, the input lines being linked to inputs of the groupwise elementary synchronous switches of the first stage, and the groups of m outputs of the groupwise elementary synchronous switches of the last stage being respectively linked to the N' groups of m output lines.

20. Groupwise synchronous switching core according to Claim 19, **characterized in that** when N'=pk, the groupwise elementary synchronous switches are interconnected as a k-stage Delta network of order p whose internal links consist of groups of m lines.

21. Groupwise synchronous switching core according to Claim 19 or 20, **characterized in that** each groupwise elementary synchronous switch comprises a passive broadcasting component (90; 94), at least one component (92; 96) for receiving groups of m lines and, for each elementary concentrator of said groupwise elementary synchronous switch, an active component connected to the passive broadcasting component and including said concentrator (50) and the filters (52) associated with the pm inputs thereof.

22. Groupwise synchronous switching core according to Claim 21, **characterized in that** it comprises duplicated security blocks, each security block comprising a reception component (96) of a groupwise elementary synchronous switch, the groups of m lines (98) received by said reception component and the active components of the groupwise elementary synchronous switches of the preceding stage, whose elementary concentrators have their outputs respectively linked to said groups of m lines.

23. Groupwise synchronous switching core according to Claim 21 or 22, **characterized in that** the reception component and the active components of a groupwise elementary synchronous switch consist of respective electronic boards connected to a backplane constituting said passive broadcasting component.

24. Groupwise synchronous switching core according to any one of Claims 19 to 23, **characterized in that** an elementary concentrator (50) with $2^K$ inputs and $2^L$ outputs encompassed within a groupwise elementary synchronous switch (48; 48a; 48b), K and L being two integers such that $p=2^{K-L}$ and $m=2^L$, comprises a reverse Omega network (500) with $2^K$ inputs and L stages followed by K-L successive concentration stages (518), the j'-th concentration stage comprising $2^{K-j'}$ OR gates (520) each having two inputs respectively linked to two consecutive outputs of the preceding stage, for $1 \leq j' \leq KL$, and routing logic (524) for detecting idle and busy ATM cells simultaneously arriving on the $2^K$ inputs of the elementary concentrator, in order to route the idle cells through the reverse Omega network and the concentration stages to selected outputs in one circular direction, and in order to route the busy cells through the reverse Omega network and the concentration stages to selected outputs in the opposite circular direction.

25. Groupwise synchronous switching core according to any one of Claims 19 to 23, **characterized in that** a concentrator with $2^K$ inputs and $2^L$ outputs encompassed within a groupwise elementary synchronous switch (48; 48a; 48b), K and L being two integers such that $p=2^{K-L}$ and $m=2^L$, comprises two sorting networks (540, 542) with $2^{K-1}$ inputs and $2^{K-1}$ outputs each sorting ATM cells simultaneously arriving at its $2^{K-1}$ inputs on the basis of activity bits (Q) each indicating whether a respective one of said cells is idle or busy, in such a way that the activity bits (Q) of the cells form two respective monotonic sequences at the output of the sorting networks, **in that** the sorting networks are followed by K-L successive concentration stages (550), the first concentration stage including $2^{K-1}$ comparison elements (552), the comparison element i ($0 \leq i \leq 2^{K-1}$) of the first concentration stage having a first input receiving the ATM cell whose activity bit has the (i+l)-th largest value of one of the monotonic sequences and a second input receiving the ATM cell whose activity bit has the (i+1)-th smallest value of the other monotonic sequence, **in that**, if K-L>1, the j'-th concentration stage ($1<j' \leq K-L$) includes $2^{K-j'}$ comparison elements (552), the comparison element i ($0 \leq i < 2K^{-j'}$) of the j'-th concentration stage having two inputs respectively linked to the outputs of the comparison elements i and $i+2^{K-j'}$ of the (j'-1)-th concentration stage, and **in that** each comparison element (552) of a concentration stage (550) routes to its output a busy ATM cell if it receives at least one busy ATM cell on one of its two inputs, and an idle ATM cell if it receives no busy ATM cell on its two inputs.

FIG.1.

FIG. 2.

FIG.3.

FIG.4.

FIG.5.  32

FIG.6.

# FIG.7.

# FIG.8.

FIG.9.

Capsule

| | VPI/VCI | | A_Id | 1 Q | Ch_Routage |

Cellule ATM

Ch_Routage

| | VPI/VCI | | C_Id | LS_Id | Q | | | | Ch_Routage |

Cellule ATM

FIG.10.

FIG.11.

MASQUE

DATA    Ch_Routage

C

DATA    Ch_Routage

FIG.12.

FIG.13.

## FIG.14.

## FIG.15.

FIG. 16.

FIG. 17.

FIG. 18.

FIG. 19.